# EUROPEAN PATENT SPECIFICATION

(11) **EP 1 914 959 B1**
(45) Date of publication and mention of the grant of the patent: **28.12.2011**
(21) Application number: 06301064.9
(22) Date of filing: 19.10.2006
(51) Int. Cl.: H04L 29/08

(54) **Method and apparatus for recovery from network disconnections in a peer-peer network**
Verfahren und Vorrichtung zur Wiederherstellung nach Netzwerkunterbrechungen in einem Peer-to-Peer-Netzwerk
Procédé et dispositif pour la récupération après des déconnexions de réseau dans un réseau poste à poste

(43) Date of publication of application: 23.04.2008
(73) Proprietor: Motorola Mobility, Inc., Libertyville, IL 60048 (US)
(72) Inventor: Arnal, Julien, 31830, Plaisance du Touch (FR); Erhardt, François-Xavier, 31100, Toulouse (FR); Hansen, Mark D., Buffalo Grove, IL 60089 (US)
(74) Representative: Delumeau, François Guy

(56) References cited:
- WO-A-01/53953
- US-A1- 2001 002 900
- US-A1- 2002 023 157

## Description

### FIELD OF THE INVENTION

The present invention generally relates to peer-to-peer network systems, and more particularly relates to a method and apparatus for recovery from network disconnections in peer-to-peer (P2P) network systems.

### BACKGROUND OF THE INVENTION

In a peer-to-peer (P2P) network system, such as eDonkey or eMule, or a P2P network system based on Hyper Text Transport Protocol (HTTP), such as Gnutella or Gnutella2, when a P2P client is disconnected from the network, it loses all of its positions in any remote queues. Accordingly, devices prone to frequent network disconnections in a P2P network system, such as mobile wireless communication devices, have a very long wait time to download a file since after each disconnection the device must return to the bottom of a queue waiting to be able to download a corresponding file.

Thus, what is needed is a method and apparatus for recovery from network disconnections in P2P network systems. Furthermore, other desirable features and characteristics of the present invention will become apparent from the subsequent detailed description of the invention and the appended claims, taken in conjunction with the accompanying drawings and this background of the invention.

### SUMMARY OF THE INVENTION

The present invention is defined according to the appended set of claims.

In one aspect, the invention includes a method for preserving a queue position for a client in a Peer-to-Peer (P2P) network download from a source includes the steps of the client requesting download of a requested file from the source and a proxy assuming the queue position of the client in response to the source receiving a token from the proxy, the token being generated by the source and identifying the client and the client's queue position for the P2P network download.

In another aspect, the invention also includes a P2P network in accordance with the present invention includes a source device, a client device and a proxy device. The source device has access to a file and assigns a queue position for download of the file in response to a request for download of the file. The client device is coupleable to the source device and requests download of the file from the source device. The proxy device is coupleable to the source device and the client device and provides a token to the source device for assuming the queue position of the client device, the token identifying the client and the client's queue position for the download of the file.

### BRIEF DESCRIPTION OF THE DRAWINGS

The present invention will hereinafter be described in conjunction with the following drawing figures, wherein like numerals denote like elements, and
FIG. 1 is a diagram of a peer-to-peer (P2P) network in accordance with an embodiment of the present invention
FIG. 2 is a flow diagram for upload of file to proxy operation in the P2P network of FIG. 1 in accordance with the embodiment of the present invention;
FIG. 3 is a flow diagram for upload of file to client operation in the P2P network of FIG. 1 in accordance with the embodiment of the present invention;
FIG. 4 is a flow diagram for partial upload of file to proxy operation in the P2P network of FIG. 1 in accordance with the embodiment of the present invention;
FIG. 5 is a diagram of a wireless communication system including a mobile client device and the P2P network of FIG. 1.
FIG. 6 is a block diagram of the mobile client device of FIG. 5 in accordance with the embodiment of the present invention;
FIG. 7, consisting of FIGs. 7A and 7B, is a flowchart of the operation of the mobile client device of FIG. 6 in accordance with an embodiment of the present invention;
FIG. 8 is a block diagram of a source device of the P2P network of FIG. 1 in accordance with the embodiment of the present invention;
FIG. 9 is a flowchart of the operation of the source device of FIG. 8 in accordance with an embodiment of the present invention;
FIG. 10 is a block diagram of a proxy device of the P2P network of FIG. 1 in accordance with the embodiment of the present invention; and
FIG. 11 is a flowchart of the operation of the proxy device of FIG. 10 in accordance with an embodiment of the present invention.

### DETAILED DESCRIPTION OF THE INVENTION

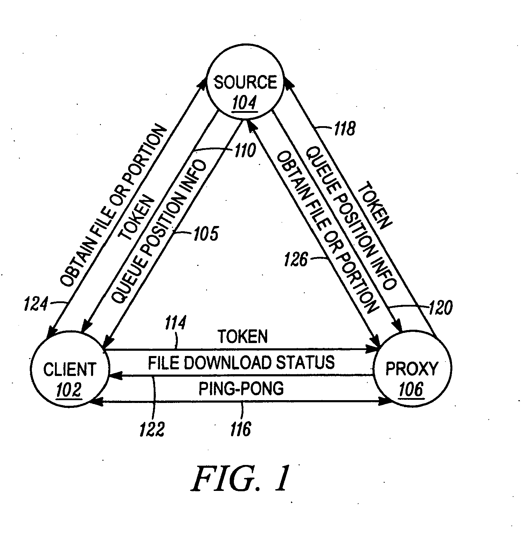

Referring to FIG. 1, a peer-to-peer (P2P) network 100 in accordance with an embodiment of the present invention includes a mobile client device 102 which connects to a source device 104 to request download of a file therefrom. The source device 104 establishes a queue for uploading files and places the client device 102 in the queue and provides queue position information 105 to the client device 105.

As the mobile client 102 is likely to become disconnected from the P2P network 100 and, consequently, lose its position in the queue, in accordance with the embodiment of the present invention the P2P network 100 further includes a proxy device 106, which is preferably a fixed device, to which the client device 102 communicates information for the proxy device 106 to connect to the source device 104 to maintain the mobile client's 102 place in the download queue.

When the client device 102 requests download of a file from the source device 104, the source device 104 provides a token 110 identifying the client device 102 and the assigned position in queue for download of the file from the source device 104. The source device thereafter provides queue position information 105 to the client device 102. In accordance with the embodiment of the present invention, the client device 102 then provides the token 114 to the proxy device 106. The client device 102 and the proxy device 106 use regular ping/pong messages 116 therebetween so that the proxy device 106 will detect if the client device 102 disconnects from the P2P network 100. When the proxy device 106 detects that the client device 102 is disconnected from the P2P network 100, the proxy device 106 provides the token 118 to the source device 104. The source device 104 terminates providing the queue position information 105 to the client device 102 either in response to detecting the disconnection from the client device 102 or in response to receiving the token 118 from the proxy device 106, and thereafter provides the queue position information 120 to the proxy device 106. In this manner, the proxy device 106 assumes the queue position of the client device 102.

When the client device 102 reconnects to the P2P network 100, the proxy device 106 provides file download status information 122 to the client device 102. If the client device 102 provides the token to the source device 104, the source device 104 exchanges responsibility for the download from the proxy device 106 back to the client device 102.

At an upload time corresponding to the queue position of the client device 102, source device 104 uploads the file. If the client device 102 has responsibility for the download at the upload time, the source device 104 uploads the file 124 to the client device 102. If the proxy device 106 has responsibility for the download at the upload time corresponding to the queue position of the client device 102, the source device 104 uploads the file 126 to the proxy device 106. The client device 102 can thereafter connect to the P2P network 100 and download the file from the proxy device 106.

When the client device 102 reconnects to the P2P network and contacts the proxy device 106 while the file is being downloaded thereto, the client device 102 can wait until the file is fully downloaded and then request the proxy device 106 to upload the file to the client device 102. As those skilled in the art will recognize, two downloads of the file would require twice the network bandwidth as a single download. To reduce the network bandwidth impact, the client device 102 can provide the token to the source device 104 while the source device 104 is uploading the file to the proxy device 106; the source device 104, in response thereto, can terminate the upload of the file to the proxy device 106 and then upload the file to the client device 102. Alternatively, to save additional network bandwidth, after terminating the upload of the file to the proxy device 106, the source device 104 uploads an un-uploaded portion of the file to the client device 102, rather than the whole file. Thereafter, the client device 102 can retrieve from the proxy device 106 the uploaded portion of the file that was uploaded by the source device to the proxy device 106.

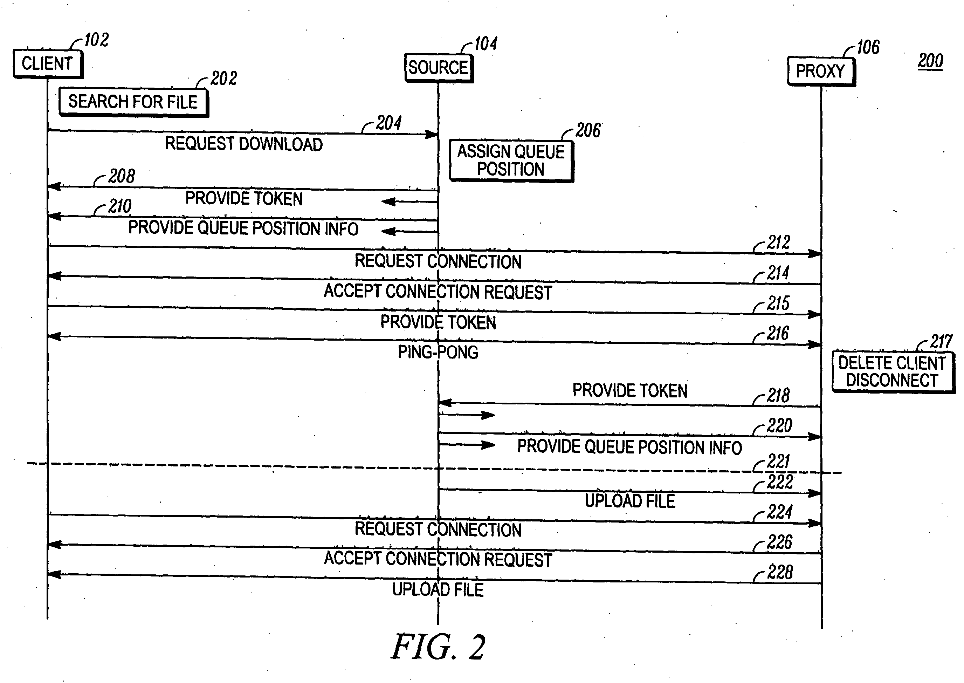

FIGs. 2, 3 and 4 are flow diagrams showing communication in the P2P network 100 in accordance with the embodiment of the present invention. Referring to FIG. 2, a flow diagram 200 of a download file request and proxy acquisition is shown. Initially, the client device 102 searches for information, such as a file 202. After locating the file at a source device 104, the client device requests download of the file 204 from the source device 104. The source device 104 assigns a queue position for upload of the file 206 to the client device 102. The source device then provides a token 208 to the client device, the token identifying the client device 102, the source device 104 and the client device's 102 queue position for download of the file thereto. Thereafter, the source device 104 provides queue position information 210 to the client device 102.

In accordance with the embodiment of the present invention, the client device contacts a proxy device 106 by requesting a connection therewith 212. In response to the client device receiving acceptance of the connection request 214 from the proxy device 106, the client device provides the token 215 to the proxy device 106. The client device 102 and the proxy device 106 then use regular ping/pong messages 216 therebetween so that the proxy device 106 can detect if the client device 102 disconnects from the P2P network 100. When the proxy device 106 detects 217 that the client device 102 is disconnected from the P2P network 100, the proxy device 106 then provides the token 218 to the source device 104. The source device 104, in response to receiving the token 218 from the proxy device 106, exchanges responsibility for the file download from the client device 102 to the proxy device 106 and, thereafter, provides queue position information on the file download 220 to the proxy device 106.

At time 221 corresponding to the queue position for the file download, the source device 104 uploads the file 222 to the proxy device 106. Subsequently, when the client device 102 reconnects to the P2P network 100, the client device 102 sends a connection request 224 to the proxy device 106. After providing a connection request acceptance 226 to the client device 102, the proxy device uploads the file 228 to the client device 102.

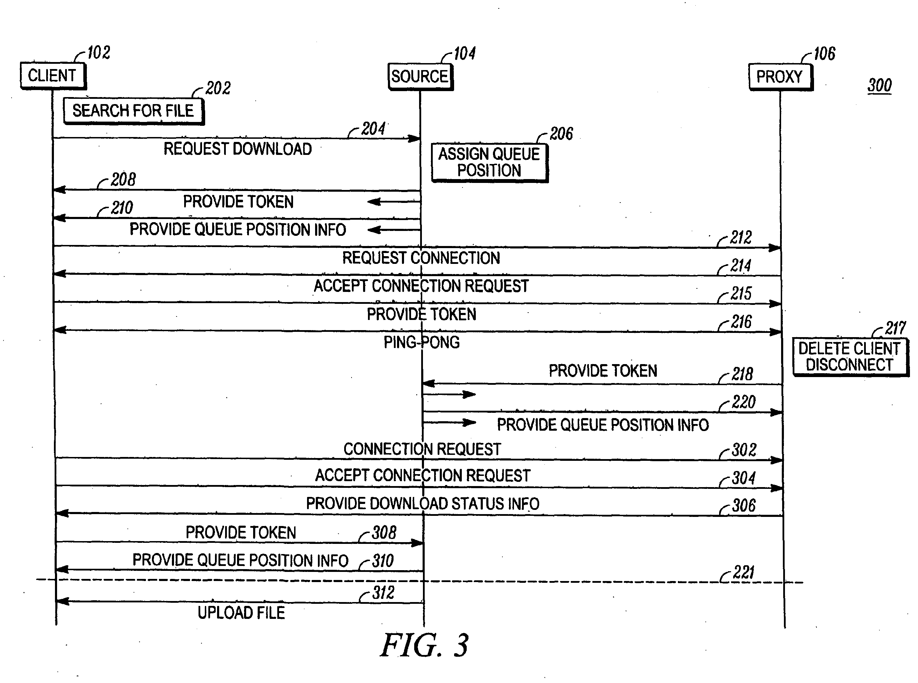

FIG. 3 is a flow diagram 300 depicting when the client device 102 reconnects to the P2P network 100 before the time for the file download. After the proxy device 106 has assumed responsibility for receiving the queue position information 220 from the source device 104, the client device 102 reconnects to the P2P network 100 after a disconnection by providing a connection request 302 to the proxy device 106. After providing a connection request acceptance 304, the proxy device 104 provides status information on the file download 306 to the client device 102. The client device 102, realizing that the file has not been downloaded to the proxy device 106, provides the token 308 to the source device 104. After receiving the token 308 from the client device 102, the source device 104 provides all future queue position information 310 to the client device 102. At the time 221 corresponding to the queue position for the file download, the source device 104 uploads the file 312 to the client device 102.

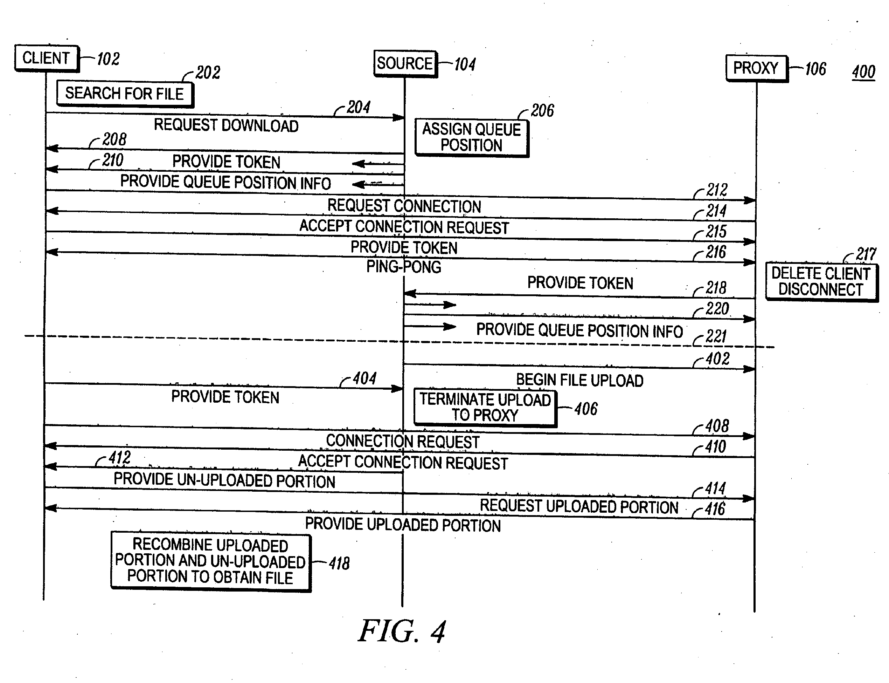

FIG. 4 is a flow diagram 400 depicting when the client device 102 reconnects to the P2P network 100 during the time the file is being uploaded from the source device 104 to the proxy device 106. At time 221 corresponding to the queue position for the file download, the source device 104 begins to upload the file 402 to the proxy device 106. Having been disconnected from the P2P network 100, the client device 102 provides the token 404 to the source device 104. In response to receiving the token 404, the source device 104 terminates uploading of the file 406 to the proxy device and uploads an unuploaded portion of the file 408 to the client device 102.

After receiving the unuploaded portion of the file 412, the client device 102 reconnects to the P2P network 100 by providing a connection request 410 to the proxy device 106. After receiving a connection request acceptance 412 from the proxy device 106, the client device 102 provides a request to the proxy device 106 for the uploaded portion of the file 414 that was uploaded to the proxy device 106. The proxy device 106 then forwards the uploaded portion it had received and stored 416 to the client device 102. The client device 102 then recombines 418 the uploaded portion of the file that was uploaded to the proxy device 106 with the unuploaded portion of the file downloaded from the source device 104.

Given various constraints of the P2P network and particularly the length of the queue for file downloads from the source device 104, the source device 104 could alternatively upload the whole file at step 412, thereby alleviating the need for steps 414 to 418. The proxy device 106 would then delete the partially uploaded portion of the file.

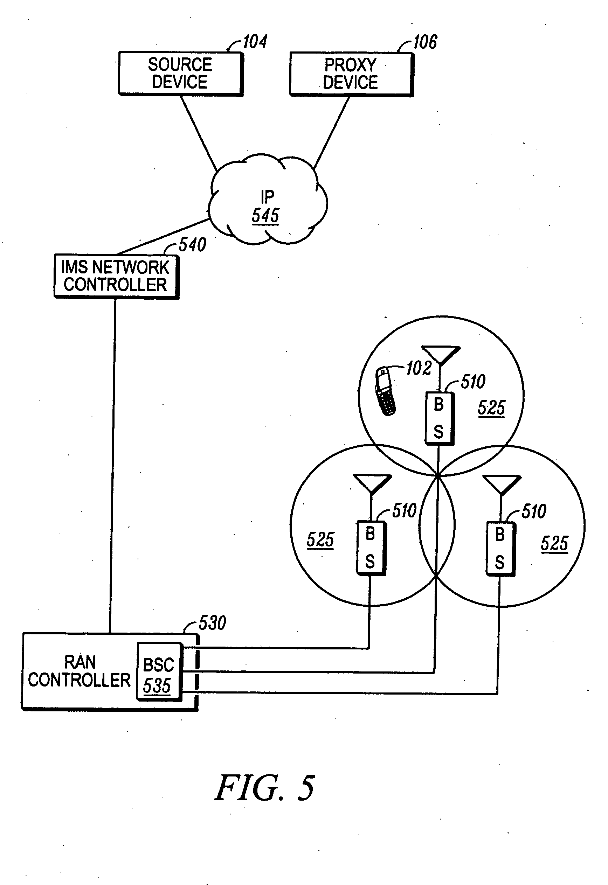

Referring next to FIG. 5, a wireless communication system 500 in accordance with the embodiment of the present invention includes a plurality of base stations 510 and a mobile client device 102, such as a wireless communication device enabled for P2P network communication. The plurality of base stations 500 communicate with the mobile client device 102 via radio frequency (RF) signals. Associated with each of the plurality of base stations 510 is a coverage area or cell 525 wherein the mobile client device 102 can receive signals from and transmit signals to such one of the plurality of base stations 510.

The plurality of base stations 510 are coupled to a radio access network controller 530 for control of communications in the wireless communication system 500. In particular, the plurality of base stations 510 are coupled to a base station controller 535 of the radio access network controller 530 which controls signaling with each of the plurality of base stations 510. The radio access network controller 530 can access the base station controller 535 to determine which cell 525 of the wireless communication system 500 a mobile client device 102 is located in by determining which one of the plurality of base stations 510 is receiving RF signals from the mobile client device 102.

The radio access network controller 530 is coupled to an internet protocol (IP) multimedia subsystem (IMS) network controller 540. The IMS network controller 540 is an internet server for control of communications between the radio access network and the internet 545. Thus, the mobile client device 102 can access a fixed server through the IMS network controller 540. In addition, the IMS controller 540 could establish and maintain communications with another mobile IP-enabled device by coupling to another IMS controller. In accordance with the embodiment of the present invention, the mobile client device 102 couples to the source device 104 and the proxy device 106 for establishing and maintaining the P2P communication network 100.

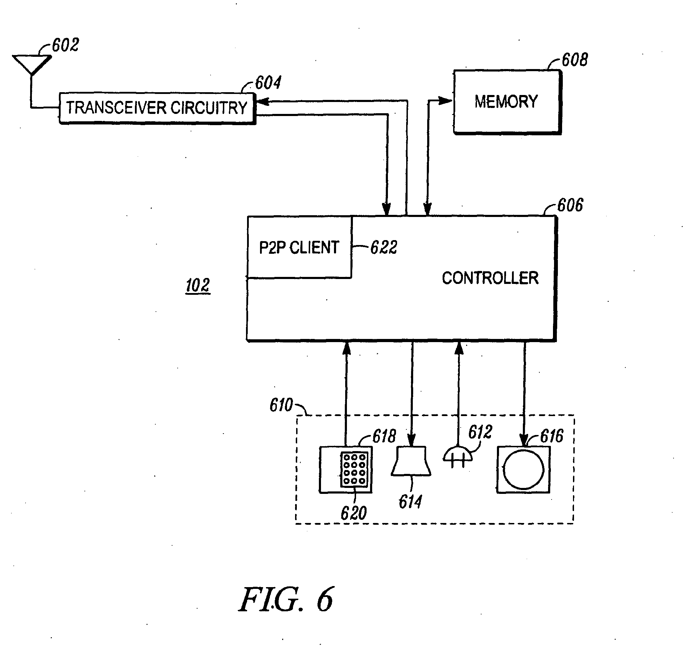

Referring to FIG. 6, in accordance with the embodiment of the present invention the mobile client device 102 is a wireless communication device and includes an antenna 602 for receiving and transmitting radio frequency (RF) signals. Transceiver circuitry 604 is coupled the antenna 602 and, in a manner familiar to those skilled in the art, demodulates and decodes the RF signals received from the base stations 510 (FIG. 5) to derive information therefrom and provides the decoded information thereto to a controller 606 for utilization thereby in accordance with the function(s) of the mobile client device 102. The controller 606 also provides information to the transceiver circuitry 604 for encoding and modulating information into RF signals for transmission from the antenna 602.

As is well-known in the art, the controller 606 is typically coupled to a memory device 608 and a user interface 610 to perform the functions of the mobile client device 102 including the wireless communication functions and the IP/IMS functions. The user interface 610 includes a microphone 612, a speaker 614 and a display 616 which may be designed to accept touch screen inputs. The user interface 610 also includes one or more key inputs 618, including a keypad 620.

The mobile client device 102 can communicate with other wireless communication devices in the radio access network managed by the radio access network controller 530. In addition, the mobile client device 102 is an IMS-enabled wireless communication device and can participate in multimedia IP communication sessions, such as P2P network communication sessions, via the IMS network controller 540 (FIG. 5). The mobile client device 102 can initiate or join P2P networks 100 through activation of a P2P client application 622 in the controller 606. For example, a P2P client application such as Gnutella2 enables a user of the mobile client device 102 to send a search query for a file or files through the P2P network 100 in order to find the file(s).

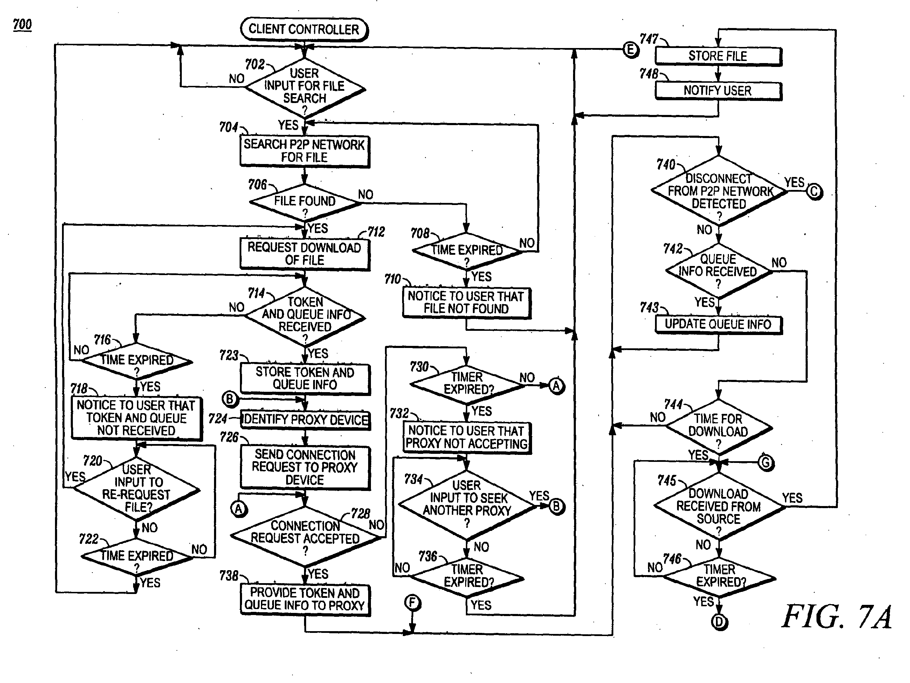

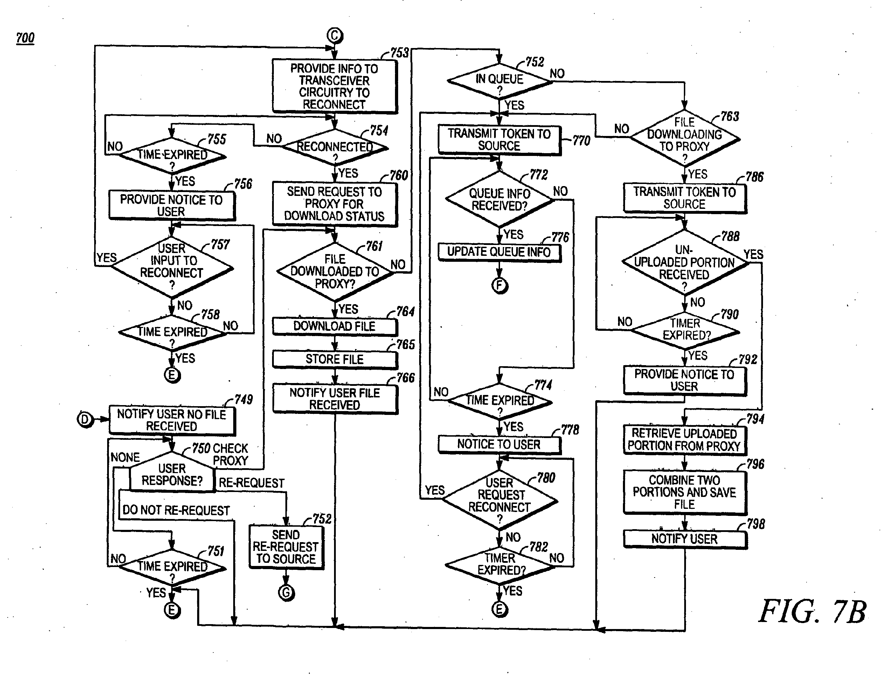

Referring to FIG. 7, consisting of FIGs. 7A and 7B, a flowchart 700 of the operation of the controller 606 in accordance with the embodiment of the present invention begins by awaiting a signal from the user interface circuitry 610 indicating reception of a user input for a file search 702. When a user input for a file search is received 702, the P2P client 622 is signaled and an application such as eDonkey, eMule, or Gnutella2 is activated to search for the file 704 at various sites and devices coupleable as P2P network devices across the internet 545 (FIG. 5). The search for the file continues 704 until either the file is found 706 or a predetermined time period for searching expires 708. If the predetermined time period expires 708 without finding the file, the user is notified that the file was not found in a timely manner 710 and processing returns to await the next user input regarding a file search 702.

When the file is found 706 at a source device 104 such as a server, the controller 606 provides information to the transceiver circuitry 604 to request download of the file 712 from the source device 104. Processing then awaits either information from the transceiver circuitry 604 indicating reception of signals including a token and queue information related to the file download 714 or expiration of a predetermined time period for awaiting such information 716 from the source device 104. If the predetermined time period expires 716 without receiving the token and/or queue information 714, the controller 606 provides information to the user interface circuitry 610 to provide a notice to the user that the token and queue information was not timely received 718. Processing then awaits either a signal from the user interface circuitry 610 indicating reception of a user input indicating a re-request of the download of the file 720 from the source device 104 or expiration of a predetermined time period for receipt of such user input 722. If a user input indicating a re-request of the download of the file 720 from the source device 104 is received, processing returns to step 712 to re-request download of the file. If, on the other hand, the predetermined time period expires 722 without the appropriate user input 720, processing returns to await the next user input regarding a file search 702.

When the token and queue information are received 714, the token and queue information are stored 723 in the memory 608 and, in accordance with the embodiment of the present invention, a proxy device 106 is identified 724. Preferably, the proxy device is a fixed device or a device which is unlikely to disconnect from the P2P network 100 during the time waiting for the file download. As described before, when a prior art mobile client device is disconnected from the P2P network 100, it must return to the bottom of the queue waiting to download a file from the source device 104. In accordance with the present invention, the proxy device 106 will reduce the overall queue waiting time by maintaining the queue slot for the client device 102 and thus it is preferable that the proxy device 106 not be subject to frequent disconnections from the P2P network 100.

After identification of a proxy device 724, the controller 606 provides information to the transceiver circuitry 604 for transmitting a connection request 726 to the proxy device 106. Processing then awaits either reception of information from the transceiver circuitry 604 that the connection request has been accepted 728 by the proxy device 106 or expiration of a predetermined time 730 for awaiting a connection request acceptance response 728. If the predetermined time expires 730, the controller 606 provides information to the user interface circuitry 610 to provide notice to the user that the identified proxy has not accepted the connection request 732. Processing then awaits either signals received from the user interface circuitry 610 indicating a user input requesting another proxy be sought 734 or expiration of a predetermined time to await such user response 736. If the user input is received 734, processing returns to identify another proxy 724 and a connection request is sent 726 to that proxy device 106. If, on the other hand, the predetermined time expires 736 without the user input 734, processing returns to await the next user input regarding a file search 702.

When the connection request acceptance is received 728, the token and queue information are provided 738 to the transceiver circuitry 604 for transmitting to the proxy device 106. Processing then awaits either detection of disconnection 740 of the client device 102 from the P2P network 100, reception of queue information 742 from the source device 104, or the time for file download 744. If the mobile client device 102 remains connected to (i.e., is not disconnected from) 740 the source device 104, queue information is received 742 from the source device and the controller 606 stores the queue information (or updates the stored queue information) 743 in the memory 608. When it is the scheduled time for download of the file 744 as determined from the downloaded queue information, processing awaits the source device 104 uploading the file 745 to the client device 102 or expiration of a predetermined time for the file to be received 746. When the file is uploaded 745 from the source device 104, the controller 606 stores the file 747 into the memory 608 and notifies the user that the file has been received 748. Processing then returns to await the next user input regarding a file search 702.

When the predetermined time expires 746 before the file is received 745 from the source device 104, the user is notified that the file was not timely received 749 and given three possible valid responses: the user can re-request the file from the source device 104, the user and decide not to re-request the file, or the user can check to see if the file was downloaded to the proxy device 106. Processing awaits either information from the user interface circuitry 610 indicating a valid user response 750 or expiration of a predetermined time for a user response 751. If time expires without a user response, processing returns to await the next user input regarding a file search 702. If a user response is received 750 indicating that the user wishes to re-request the file from the source device 104, information is provided to the transceiver circuitry 604 to provide a re-request 752 to the source device 104 and processing returns to await the source 104 uploading the file 745 or expiration of the time to await the file 746. If a user response is received 750 indicating that the user does not wish to re-request the file from the source device 104, processing returns to await the next user input regarding a file search 702. And if a user response is received 750 indicating that the user wishes to check to see if the file was downloaded to the source device 106, processing proceeds to step 764, described hereinbelow, to check and/or retrieve the downloaded file from the proxy device 106.

When disconnection from the P2P network 100 is detected 740, the controller 606 provides information to the transceiver circuitry 604 to reconnect 753 to the P2P network. This could involve reestablishing contact with another base station 510 in a coverage area 525 into which the mobile client device 102 has traveled and/or may involve reconnection over the internet 545 to the P2P network (i.e., to the source device 104). Several reconnection schemes are familiar to those skilled in the art, any of which could be utilized at step 753. Processing then awaits either detection that the client device 102 is reconnected 754 to the P2P network 100 or expiration of a predetermined time for such reconnection 755. If time expires 755 without reconnection 754, information is provided from the controller 606 to the user interface circuitry 610 to provide a notice to the user that timely reconnection has failed 756. The controller 606 then awaits either information from the user interface circuitry 610 indicating a user input to re-attempt reconnection 757 to the P2P network 100 or expiration of the predetermined time 758 to await such user input 757. If the appropriate user input is detected 757, another attempt to reconnect is made by returning to step 753. If the predetermined time expires 758 without detection of the appropriate user response 757, processing returns to await the next user input regarding a file search 702.

When the controller 606 detects that the mobile client device 102 is reconnected 754 to the P2P network 100, information is provided to the transceiver circuitry 604 for transmitting a request to the proxy device 106 to obtain file download status therefrom 760. Thereafter, either the file has been downloaded 761 to the proxy device or the proxy device 106 is still in queue for the file download 762 or the file is presently being downloaded 763 to the proxy device 106 as determined by controller 606 in response to the assigned file download time and the present time. If the file has been downloaded 761 to the proxy device 106, information is provided to the transceiver circuitry 604 to request the file from the proxy device 106 and the file is downloaded 764 to the client device 102. The controller 606 stores the file 765 in the memory 608 and provides information to the user interface circuitry 610 to notify the user that the file has been received and stored 766. Processing then returns to await the next user input regarding a file search 702.

If the controller 606 determines that the proxy device 106 is still in queue for the file download 762, the controller 606 provides information to the transceiver circuitry 604 for transmitting the token 770 to the source device 104. The controller 606 then determines whether information is received from the transceiver circuitry 604 indicating that queue information such as updated status information has been received 772 from the source device 104 or a predetermined time interval has expired for the reception of such information 774. When the queue information is received 772, the controller 606 updates the queue status information in the memory 608 and processing returns to determine whether a P2P network 100 disconnection has been detected 740, additional queue information is received 742 or it is time for downloading the file 744.

If the predetermined time interval for receiving updated queue information has expired 774 without receiving any such information 772, information is provided to the user interface circuitry 610 to provide a notice to the user 778 and processing awaits either the reception of information from the user interface circuitry 610 indicating that the user requests resending the token to the source device 104 to receive updated queue information 780 or expiration of time for receiving such user response 782. If the appropriate user response is received 780, the token is resent 770 to the source device 104 and updated queue information is awaited 772. If the time for receiving the user response expires 782 without receiving the appropriate user response, processing returns to determine whether a P2P network 100 disconnection has been detected 740, additional queue information is received 742 or it is time for downloading the file 744.

If the controller 606 determines from received queue information that the file is presently being downloaded 763 to the proxy device 106, information is provided to the transceiver circuitry 604 for transmitting the token 786 to the source device 104. The controller 606 then awaits reception of information from the transceiver circuitry 604 indicating receiving, in response thereto, a portion of the file 788 from the source device 104, where the portion received is an unuploaded portion of the file (i.e., a portion of the file that was not uploaded by the source device 104 to the proxy device 106). If the unuploaded portion of the file is not received 788 within a predetermined time 790, the controller 606 provides information to the user interface circuitry 610 to provide a suitable notification to the user 792 and processing returns to await the next user input regarding a file search 702.

When the un-uploaded portion of the file is received 788 from the source device 104, the controller 606 provides information to the transceiver circuitry 604 to request from the proxy device 106 retrieval of the portion of the file uploaded thereto 794. While pictured as a single step 794 because reception of the un-uploaded portion 788 from the source device 104 implies that a portion has been uploaded to the proxy device 106, there could be additional steps to anticipate not receiving a timely connection request acceptance from the proxy device 106 or not timely receiving the uploaded portion of the file from the proxy device 106.

Once the un-uploaded portion of the file is received 788 and the uploaded portion of the file is retrieved 794, the controller 606 combines the two portions and stores the downloaded file 796 in the memory 608. Combination of the uploaded and un-uploaded portions may involve some processing as the source device 104 may be programmed to send some of the last information sent to the proxy device 106 also to the mobile client device 102 in order to anticipate that some of this information may not have been fully uploaded to the proxy device 106 due to the nature of the communication protocol which typically transfers information in blocks. The controller 606 then provides information to the user interface circuitry to notify the user that the file has been downloaded 798 and processing returns to await the next user input regarding a file search 702.

The operation of the controller 606 shown in FIG. 7 focuses on the operation of controller 606 in accordance with the embodiment of the present invention. Those skilled in the art will realize that numerous other operations and features of the mobile client device may be implemented and controlled by the controller 606 or in other hardware or software components of the mobile client device 102. In addition, those skilled in the art will realize that modifications and alterations of the operation shown in FIG. 7 may be made without departing from the embodiment of the present invention. For example, as described above, if reduction of network bandwidth usage is not a concern, the source device 104 may re-transmit the whole file 788 to the mobile client device 102 in response to receiving the token therefrom 786. In this case, there would be no need for steps 794 and 796.

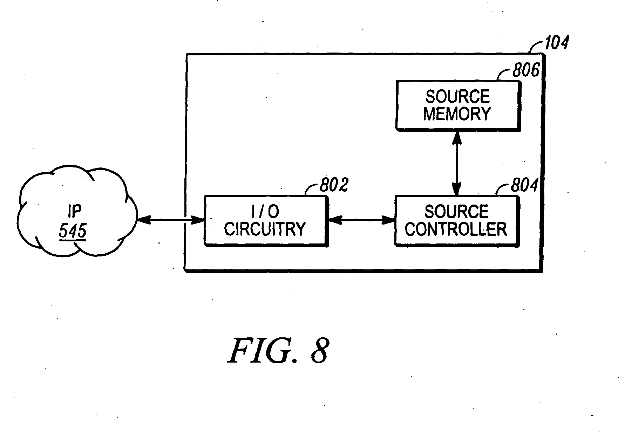

Referring next to FIG. 8, a simplified block diagram of a source device 104 in accordance with the present invention is shown. Communication from the source device 104 to and from the internet 545 is handled by input/output circuitry 802 which, in accordance with the embodiment of the present invention, provides signals to and receives signals from other devices in the P2P network 100. A source controller 804 is coupled to the input/output circuitry 802 and to a source memory 806. In accordance with one aspect of the present invention, the source device 104 has a file requested by the client device (hereinafter referred to as "the file") for download stored in the source memory 806.

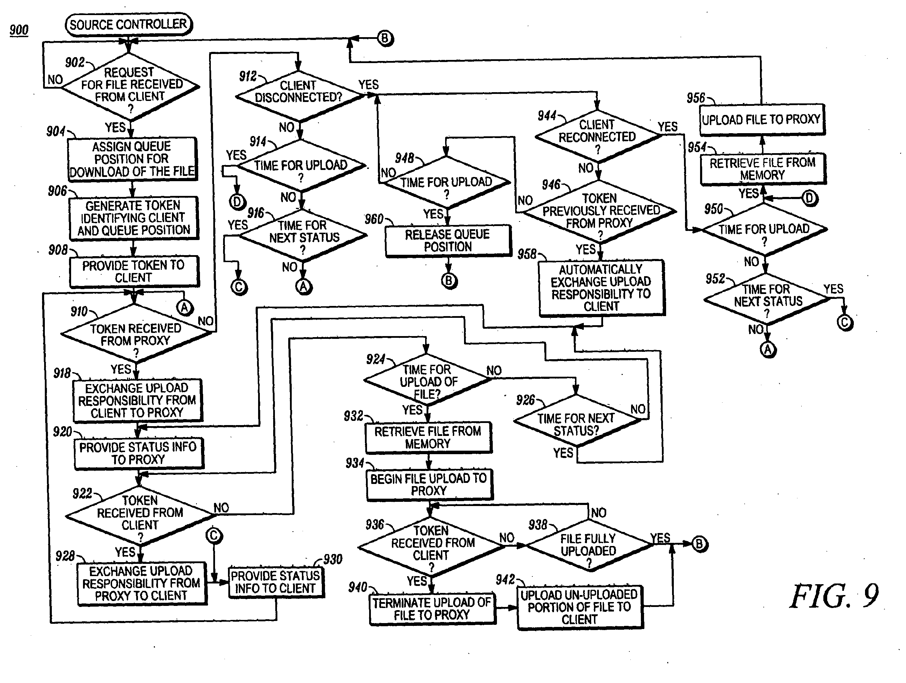

FIG. 9 is a flowchart of the operation of the source controller 804 in accordance with the embodiment of the present invention and begins by awaiting a request for the file 902 from the client device 102. In response to a request for the file 902, the source controller 804 assigns a queue position for download of the file 904 and generates a token 906 identifying the client device 102 in the P2P network 100 requesting download of the file and the client device's 102 queue position or scheduled time for download of the file. The source controller 804 then provides the token 908 to the input/output circuitry 802 for provision to the client device 102.

Processing next awaits the occurrence of one of the following four events: the source controller 804 detecting reception of the token 910 from a proxy device 106 by the input/output circuitry 802, the source controller 804 detecting disconnection 912 of the client device 102 from the P2P network 100, the source controller 804 determining that it is time for uploading of the file 914, or the source controller 804 determining that it is time for providing status information on the queue position 916 of the client device 102.

If the source controller 804 detects reception of the token 910 from the proxy device 106 by the input/output circuitry 802, the source controller 804 exchanges responsibility for the upload 918 from the client device 102 to the proxy device 106 and provides queue position information (i.e., updated download status information) 920 to the proxy device 106. Processing then awaits the source controller 804 detecting reconnection 922 of the client device 102 to the P2P network 100 (which could include reception of the token from the client device 102), determining that it is time for uploading of the file 924, or determining that it is time to provide a queue position status update 926.

If the source controller 804 detects the client device 102 reconnecting 922 to the P2P network 100, the source controller 804 exchanges responsibility for the upload 928 from the proxy device 106 to the client device 102 and provides updated queue position information (i.e., updated download status information) 930 to the client device 102. Processing then returns to await reception of the token 910 from the proxy device 106, disconnection 912 of the client device 102 from the P2P network 100, time for uploading the file 914 or time for another status update 916.

If the source controller 804 determines that it is time for uploading the file 924 while the proxy has responsibility for file download, the source controller 804 retrieves the file 932 from the source memory 806 and begins uploading the file 934 to the proxy device 106. Processing next determines whether reconnection of the client device 102 to the P2P network 100 and reception of the token from the client device is detected 936 occurs before the file is fully uploaded 938 to the proxy device 106. If the file is fully uploaded 938 to the proxy device 106 before the client device reconnects 936 to the P2P network 100, processing then returns to await a next request for a file 902 from a client device 102. Conversely, if reconnection of the client device 102 to the P2P network 100 is detected 936 before the file is fully uploaded 938, the source controller 804 terminates 940 upload of the file to the proxy device 106 and uploads an un-uploaded portion of the file 942 to the reconnected mobile client device 102. The unuploaded portion provided 942 to the mobile client device 102 may include additional bits from the portion uploaded 934 to the proxy device 106 to accommodate any bits not received by the proxy device 106 due to the block-structure nature of the information transfer. With the file fully uploaded (an "uploaded" portion to the proxy device 106 and an "un-uploaded portion" to the client device 102), processing returns to await a next request for a file 902 from the client device 102.

When disconnection of the client device 102 from the P2P network 100 is detected 912, processing determines whether reconnection of the client device 102 is detected 944, whether a token has previously been received 946 from a proxy device 106, or whether it is time for download of the file 948. When reconnection of the client device 102 is detected 944 after disconnection thereof 912 and before a token is received 946 from the proxy device 106 or the time for download of the file 948, the source controller 804 determines whether it is time, after the reconnection 944, for download of the file 950 or time for the next update of the queue information 952.

If it is time for download of the file 950 with the client device 102 reconnected 944, the source controller 804 retrieves the file 954 from the source memory 806 and uploads the file 956 to the client device 102. Processing then returns to await a next request for a file 902 from the client device 102. If it is time for an update of the queue information 952 after reconnection 944 of the client device 102, the updated status information is provided 930 to the client device 102 and processing returns to await reception of the token 910 from the proxy device 106, disconnection 912 of the client device 102 from the P2P network 100, time for uploading the file 914 or time for another status update 916. Alternatively, if it is neither time for a download 950 or time for an update of the status information 952, processing returns to await reception of the token 910 from the proxy device 106, disconnection 912 of the client device 102 from the P2P network 100, time for uploading the file 914 or time for another status update 916.

If reconnection of the client device 102 has not been detected 944 after disconnection thereof 912, but the proxy device 106 has previously provided the token 946 to the source controller 804, the source controller 804 automatically exchanges responsibility for the uploading of the file 958 from the client device 102 to the proxy device 106 and provides current queue information 920 to the proxy device 106. If it is time for upload of the file 948 and disconnection of the client device 102 has been detected 912 without reconnection thereof 944, and the token has not been received 946 from a proxy device 106, there is, consequently, no device connected to the P2P network 100 for upload of the file, so the queue position is released 960 and processing returns to await a next request for a file 902 from a client device 102.

If the source controller 804 determines that it is time for the file to be uploaded 914 and no token has been received 910 from a proxy device 106 and the client device 102 has not disconnected 912 from the P2P network 100, the source controller 804 retrieves the file 954 from the source memory 806 and uploads the file 956 to the client device 102. Processing then returns to await a next request for a file 902 from the client device 102. Alternatively, if the source controller 804 determines that it is time to provide updated queue position information 916 and no token has been received 910 from a proxy device 106 and the client device 102 has not disconnected 912 from the P2P network 100, the updated queue status information is provided 930 to the client device 102 and processing returns to await reception of the token 910 from the proxy device 106, disconnection 912 of the client device 102 from the P2P network 100, time for uploading the file 914 or time for another status update 916.

A number of modifications and additions can be made to the flow diagram of FIG. 9 while keeping to the invention. For example, as the source device 104 may have multiple files stored in the source memory 806 that can be retrieved through P2P applications, a number of routines such as that depicted in FIG. 9 could be running in parallel. In addition, the same file could be requested by multiple client devices in various peer-to-peer networks and the source controller will be maintaining and updating queue information for all of the client devices as well as uploading the file to those client devices at appropriate times.

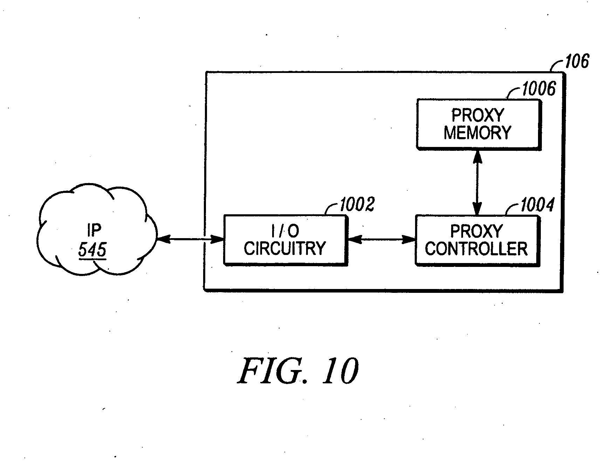

Referring next to FIG. 10, a simplified block diagram of a proxy device 106 in accordance with the present invention is shown. Communication from the proxy device 106 to and from the internet 545 is handled by input/output circuitry 1002 which, in accordance with the embodiment of the present invention, provides signals to and receives signals from other devices in the P2P network 100. A proxy controller 1004 is coupled to the input/output circuitry 1002 and to a proxy memory 1006.

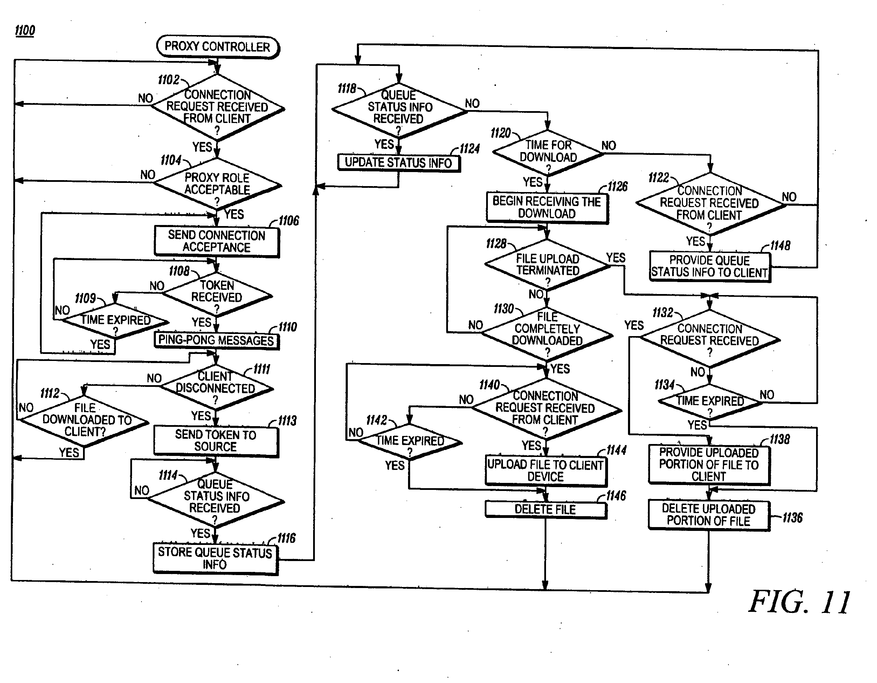

FIG. 11 is a flow chart 1100 of the operation of the proxy controller 1004 in accordance with the embodiment of the present invention and begins by awaiting reception of a connection request 1102 from the client device 102. When a connection request is received 1102, and the proxy device 106 is able to accept the role of "proxy" 1104, the proxy controller 1004 provides connection request acceptance information 1106 to the input/output circuitry 1002 for provision to the client device 102.

Next, processing awaits reception of the token 1108 from the client device 102 within a predetermined time interval 1109. If the token is not received 1108 within the predetermined time interval 1109, the proxy controller again provides connection request acceptance information 1106 to the input/output circuitry 1002 for provision to the client device 102 until the token is received 1108.

When the token is received 1108, the proxy controller 1004 uses regular ping/pong messaging 1110 between the proxy device 106 and the client device 102 to determine if communication is maintained with the client device 102. Processing next determines from the communication 1110 between the proxy device 106 and the client device 102 whether disconnection of the client device 102 from the P2P network 100 has been detected 1111 or notification 1112 that the file has been downloaded to the client device 102. When the proxy controller 1004 receives notification 1112 that the file has been downloaded to the client device 102, processing returns to await the next connection request 1102 from a client device 102. When disconnection of the client device 102 from the P2P network 100 has been detected 1111, the proxy controller 1004 provides the token 1112 to the input/output circuitry 1002 for provision to the source device 104 so that the proxy device 106 may assume the position of the client device 102 in the queue awaiting the file download. After sending the token 1112, the proxy controller awaits reception of queue position information, such as queue status information, concerning the client device's 102 queue position 1114 from the source device 104. When the queue position information is received 1114, the proxy controller stores the information 1116 in the proxy memory 1006.

Processing next awaits either reception of additional queue position information 1118 from the source device 104 or the time for file download 1120 as determined by the reception of initial portions of the file uploaded from the source device 104 or reception of another connection request 1122 from the client device 102. When additional queue position information is received 1118 from the source device 104, the proxy controller 1004 updates the queue position information 1124 stored in the proxy memory 1006. Processing then returns to await reception of additional queue position information 1118 or the time for file download 1120 or reception of another connection request 1122 from the client device 102.

At the time for the file download 1120, the proxy controller 1004 begins receiving initial portions of the file 1126 uploaded from the source device 104. The proxy controller 1004 continues to receive portions of the file until either uploading of the file from the source device 104 has been terminated 1128 after receiving only an uploaded portion of the file from the source device 104 or the file is completely uploaded 1130 from the source device 104.

If only a portion of the file has been uploaded 1128, processing awaits reception of a connection request 1132 from the client device 102 for retrieval of the uploaded portion of the file within a predetermined time period 1134, where the predetermined time period is as long as a matter of hours or even days. If no connection request is received 1132 from the client device 102 within the time period 1134, the stored portion of the file is deleted 1136 from the proxy memory 1006 and processing returns to await another connection request for a future file download 1102. When a connection request is received 1132 from the client device 102, the proxy controller 1004 accepts the connection request and retrieves the uploaded portion of the file from the proxy memory 1006 then provides the retrieved uploaded portion of the file 1138 to the input/output circuitry 1002 for provision to the client device 102. The uploaded portion of the file is then deleted 1136 from the proxy memory 1006 and processing returns to await another connection request for a future file download 1102.

When the file is completely uploaded 1130 from the source device 104 and stored in the proxy memory 1006, the proxy controller 1004 awaits either reception of a connection request 1140 from the client device 102 or expiration of a very long time period (e.g., a period of days) 1142. When the connection request is received 1140 from the client device 102, the proxy controller retrieves the file from the proxy memory 1006 and uploads the file 1144 to the client device 102. The proxy controller 1004 then deletes the file 1146 from the proxy memory 1006 and processing returns to await a connection request from the client device 102 or another client device to act as a proxy device for a future file download 1102. If the time expires 1142 for maintaining the file in the proxy memory 1006 without a connection request 1140 from the client device 102, the proxy controller 1004 deletes the file 1146 from the proxy memory 1006 and processing returns to await another connection request for a future file download 1102.

When another connection request is received 1122 from the client device 102, the proxy controller 1004 retrieves file download status information (i.e., the updated queue position information for the client device 102) from the proxy memory 1006 and provides the file download status information 1148 to the input/output circuitry 1002 for providing to the client device 102. Alternatively, if the client device 102 has not disconnected from the P2P network 100, instead of sending a connection request 1122 to the proxy device 106, the client device 102 may send a status request thereto, in response to which the proxy controller 1004 retrieves the file download status information from the proxy memory 1006 and provides the file download status information 1148 to the input/output circuitry 1002 for providing to the client device 102. After either scenario, processing returns to await reception of additional queue position information 1118 or the time for file download 1120 or reception of another connection request 1122 from the client device 102.

Thus it can be seen that a method and apparatus for recovery from network disconnections in P2P network systems has been provided which advantageously allows the queue position of a mobile client device 102 to be maintained even though the mobile client device 102 may disconnect from and/or reconnect to the P2P network 100 multiple times.

While at least one exemplary embodiment has been presented in the foregoing detailed description of the invention, it should be appreciated that a vast number of variations exist. For example, the client device 102 need not be a mobile device-it could be a fixed device. In addition, while connection requests and acceptance of connection requests have been discussed in regards to communications between the client device 102 and the proxy device 106, other connection or communication schemes could be employed such as peer-to-peer communication schemes proscribed by P2P network systems operating eDonkey or eMule or HTTP-based P2P network systems.

## Claims

1. A method for preserving a queue position (105) for a client (102) in a Peer-to-Peer, P2P, network download from a source (104), the method comprising the step of the client (102) requesting download of a requested file from the source (104), **characterized in that** the method comprises the step of a proxy (106) assuming the queue position of the client in response to the source receiving a token (110) from the proxy (106), the token identifying the client and the queue position of the client for download of the requested file.

2. The method of Claim 1 wherein the step of the proxy (106) assuming the queue position of the client (102) comprises the steps of:
the proxy (106) providing the token to the source (104); and
thereafter the source (104) providing queue position information to the proxy.

3. The method of Claim 1 wherein the step of the proxy (106) assuming the queue position of the client (102) comprises the step of the source (104) providing the token (110) to the client (102) in response to the client requesting a download from the source, the token identifying the client and the client's queue position for the download.

4. The method of Claim 1 wherein the step of the proxy assuming the queue position of the client comprises the step of the client providing the token (110) to the proxy (106) in response to the proxy accepting a connection request from the client.

5. The method of Claim 1 further comprising the step of the client (102) communicating with the proxy (106) to obtain file download status after the client (102) has been disconnected and reconnected to the P2P network (100).

6. The method of Claim 1 further comprising the steps of:
the client (102) reconnecting to the P2P network (100);
the client providing the token (110) to the proxy (106) and the source (104);
the proxy providing download status information to the client in response to receiving the token (110); and
the source (104) exchanging download control for the download from the proxy to the client in response to receiving the token.

7. The method of Claim 6 further comprising the step of uploading the file from the source (104) to the client (102) at a time corresponding to the client's queue position.

8. The method of Claim 1 further comprising the step of the source (104) uploading the requested file to the proxy (106) in response to the proxy having the queue position of the client (102) at a time corresponding to the client's queue position (105).

9. The method of Claim 8 further comprising the step of uploading the file from the proxy (106) to the client (102) in response to the client (102) reconnecting to the P2P network (100) after the file has been downloaded to the proxy (106).

10. The method of Claim 8 further comprising the steps of:
the client (102) reconnecting to the P2P network (100);
the client providing the token (110) to the source (104) while the source is uploading the file to the proxy (106);
the source (104) terminating the upload of the file to the proxy (106); and
the source (104) uploading the file to the client (102).

11. The method of Claim 10 wherein the step of the source (104) uploading the file to the client (102) comprises the step of the source uploading an unuploaded portion of the file to the client, the method further comprising the step of the client retrieving an uploaded portion of the file from the proxy, the uploaded portion of the file having been uploaded to the proxy prior to the source terminating the upload of the file to the proxy.

12. A peer-to-peer, P2P, network (100) comprising a source device (104) having access to a file and assigning a queue position (105) for download of the file in response to a request for download of the file, and a client device (102) coupleable to the source device (104), the client device (102) requesting download of the file from the source device (104), the P2P network **characterized in that** a proxy device (106) is coupled to the source device (104) and coupleable to the client device (102), and the proxy device is adapted to provide a token (110) to the source device (104) for assuming the queue position (105) of the client device (102), the token identifying the client device and the queue position of the client device for download of the file.

13. The P2P network (100) of Claim 12 wherein the source device (104) is adapted to provide queue position information (105) to the proxy device (106) in response to receiving the token (110) from the proxy device.

14. The P2P network of Claim 12 wherein the source device (104) is adapted to provide the token (110) to the client device (102) in response to receiving a request for a download of the file from the client device (102).

15. The P2P network (100) of Claim 12 wherein the client device (102) is adapted to provide the token (110) to the proxy device (106) in response to receiving a connection request acceptance from the proxy device (106).

16. The P2P network (100) of Claim 12 wherein the client device (102) is adapted to communicate with the proxy device (106) to obtain file download status therefrom.

17. The P2P network (100) of Claim 12 wherein the client device (102) is adapted to, after disconnecting from the P2P network, reconnect thereto and provide the token (110) to the proxy device (106), and wherein the proxy device (106) is adapted to, in response to receiving the token (110) from the client device (102), provide download status information to the client device.

18. The P2P network (100) of Claim 17 wherein the source device is adapted to, at a time corresponding to the client device's queue position (105), download the file from the source device to the client device.

19. The P2P network (100) of Claim 17 wherein the client device (102) is adapted to, after receiving the download status information from the proxy (106), provide is adapted to the token (110) to the source device (104), and wherein the source device (104) is adated to, in response to receiving the token (110) from the client device (102), exchange download control for the download from the proxy device (106) to the client device.

20. The P2P network of Claim 12 wherein the source device (104) is adapted to upload the requested file to the proxy device (106) in response to the proxy device still having the queue position of the client device at a time corresponding to the client device's queue position.

21. The P2P network (100) of Claim 20 wherein the proxy device (106) is adapted to upload the file to the client device (102) in response to the client device reconnecting to the P2P network after the file has been uploaded to the proxy device (106).

22. The P2P network (100) of Claim 20 wherein the client device (102) is adapted to reconnect to the P2P network (100) and provide the token (110) to the source device (102) while the source device is uploading the file to the proxy device (106), and wherein the source device (102) is adapted to, in response to receiving the token (110) while the source device is uploading the file to the proxy device (106), terminate the upload of the file to the proxy device and, thereafter, upload the file to the client device.

23. The P2P network (100) of Claim 21 wherein the source device (104) is adapted to upload an unuploaded portion of the file to the client device (102), and wherein the client device (102) is adapted to retrieve an uploaded portion of the file from the proxy device.

24. A mobile communication device (102) comprising transceiver circuitry (604) for transmitting signals to a peer-to-peer, P2P, network (100) and receiving signals therefrom, and a controller (606) coupled to the transceiver circuitry (604) for providing information thereto to request download of a file from a source device (104) in the P2P network (100), the mobile communication device **characterized in that** the transceiver circuitry (604) is adapted to receive signals from the source device (104) and provide information generated therefrom to the controller (606), the information including a token (110), the token identifying the mobile communication device (102) and the mobile communication device's assigned queue position (105) for the download of the file, wherein the controller (606) is adapted to in response to receiving the information, provide information including the token (110) to the transceiver circuitry (604) for transmitting signals to a proxy device (106) in the P2P network (100) so that the proxy device (106) can assume the assigned queue position of the mobile communication device (102).

25. The mobile communication device (102) of Claim 24 wherein the controller (606) is adapted to provide information to the transceiver circuitry (604) to transmit a connection request to the proxy device (106), and wherein the controller (606) is adapted to provide the information including the token (110) to the transceiver circuitry (604) for transmitting signals to the proxy device (106) in response to receiving information from the transceiver circuitry of a connection request acceptance received from the proxy device.

26. The mobile communication device (102) of Claim 24 wherein the controller (606) is adapted to provide information to the transceiver circuitry (604) for transmitting a request to the proxy device (106) to obtain file download status therefrom.

27. The mobile communication device (102) of Claim 24 wherein the controller (606) is adapted to, after detecting that the mobile communication device has disconnected from the P2P network (100), provide information to the transceiver circuitry (604) to reconnect to the P2P network (100) and to provide the token (110) to the source device (104), and the controller (606) is adapted to thereafter receive information from the transceiver circuitry including download status information from the source device (102).

28. The mobile communication device (102) of Claim 27 wherein the controller (606) is adapted to, in response to determining that the download status information indicates that the mobile communication device (102) has reconnected to the P2P network after the file has been uploaded to the proxy device (106), provide information to the transceiver circuitry (604) to connect to the proxy device (106) for receiving download signals from the proxy device (106), the download signals including the file requested.

29. The mobile communication device (102) of Claim 27 wherein the controller (606) is adapted to, in response to determining that the download status information indicates that the mobile communication device (102) has reconnected to the P2P network while the file is uploading to the proxy device (106), provide information to the transceiver circuitry (604) to connect to the source device (104) for receiving download signals from the source device (104), the download signals including at least a portion of the file requested.

30. The mobile communication device (102) of Claim 29 wherein the download signals include an unuploaded portion of the file, and wherein the controller (606) is adapted to provide information to the transceiver circuitry (604) to transmit signals to the proxy device (106) to request retrieval of an uploaded portion of the file therefrom.

31. A source device (104) for use in a peer-to-peer, P2P, network (100) comprising input/output circuitry (802) for providing signals to and receiving signals from other devices in the P2P network (100), a memory (806) for storing a file, **characterized in that** it further comprises a source controller (804) is adapted to assign a queue position (105) for upload of the file and generate a token (110) therefor in response to receiving a request for download of the file, the token (110) identifying a client device (102) in the P2P network (100) requesting download of the file and the client device's queue position (105) for the download of the file, wherein the source controller (104) is adapted to provide the token to the input/output circuitry (802) for provision to the client device, and wherein the source controller is adapted to provide queue position information concerning the client device's queue position to a proxy device (106) in response to receiving the token from the proxy device.

32. The source device (104) of Claim 31 wherein the controller (804) is adapted to, in response to receiving reconnect information including the token (110) from the client device (102), provide download status information to the client device and exchange download control for the download from the proxy device (106) to the client device (102).

33. The source device (104) of Claim 32 wherein the controller (804) is adapted to, in response to detecting disconnection of the client device (102), automatically exchange the download control for the download from the client device (102) to the proxy device.

34. The source device (104) of Claim 32 wherein the controller (804) is adapted to, at a time corresponding to the client device's queue position, retrieve the file from the memory and provide the file to the input/output circuitry to upload the file to the client device.

35. The source device (104) of Claim 31 wherein the source controller (804) is adapted to, at a time corresponding to the client device's queue position, retrieve the file from the memory (806) and provide the file to the input/output circuitry to upload the file to the proxy device (106) in response to the proxy device still having the queue position of the client device (102) at the client device's queue position.

36. The source device (104) of Claim 35 wherein the source controller (804) is adapted to, in response to receiving the token (110) from the client device (102) while uploading the file to the proxy device (106), terminate the upload of the file to the proxy device and, thereafter, upload the file to the client device (102).

37. The source device (104) of Claim 36 wherein the controller (804) is adapted to upload an unuploaded portion of the file to the client device (102).

38. The source device (104) of Claim 31 wherein the source device is a fixed server device.

39. A proxy device (106) for use in a peer-to-peer, P2P, network comprising input/output circuitry (1002) for providing signals to and receiving signals from other devices in the P2P network and a proxy controller (1004) coupled to the input/output circuitry, the proxy device **characterized in that** the proxy controller is adapted to receive a token (110) from a client device (102) in the P2P network, the token (110) identifying the client device requesting download of a file from a source device in the P2P network having access to the file and the client device's queue position for the download of the file, wherein the proxy controller (1004) is adapted to provide the token (110) to the input/output circuitry (1002) for provision to the source device for assuming the queue position of the client device (102) in response to detecting disconnection of the client device from the P2P network.

40. The proxy device (106) of Claim 39 wherein the proxy controller (1004) is adapted to receive queue position (105) information concerning the client device's queue position from the source device after providing the token (110) thereto.

41. The proxy device of Claim 39 wherein the proxy controller (1004) is adapted to provide connection request acceptance information to the input/output circuitry (1002) for providing to the client device (102) in response to receiving a connection request from the client device.

42. The proxy device (106) of Claim 39 wherein the proxy controller (1004) is adapted to provide file download status information to the input/output circuitry (1002) for providing to the client device (102) in response to receiving a status request from the client device.

43. The proxy device (106) of Claim 39 further comprising a proxy memory (1006), wherein the proxy controller (1004) is adapted to receive at least a portion of the file from the source device and store the at least a portion of the file in the proxy memory in response to still having the queue position (105) of the client device (102) at the client device's queue position.

44. The proxy device (106) of Claim 43 wherein the proxy controller (1004) is adapted to retrieve the at least a portion of the file from the proxy memory (1006) and provide the file to the input/output circuitry (1002) for download to the client device in response to detecting the client device reconnecting to the P2P network (100).

45. The proxy device of Claim 43 wherein the proxy controller (1004) is adapted to retrieve the at least a portion of the file from the proxy memory (1006) and provide the file to the input/output circuitry (1002) for download to the client device in response to receiving a request for the at least a portion of the file from the client device.

46. The proxy device of Claim 39 wherein the proxy device (106) is a fixed device.

## Patentansprüche

1. Verfahren zum Behalten einer Warteschlangenposition (105) für einen Client (102) bei einem Downloaden in einem Peer-to-Peer-Netzwerk, P2P-Netzwerk, von einer Quelle (104), wobei das Verfahren den Schritt des Anforderns eines Downloadens einer angeforderten Datei von der Quelle (104) durch den Client (102) umfaßt, **dadurch gekennzeichnet, daß** das Verfahren den Schritt des Einnehmens der Warteschlangenposition des Clients durch einen Proxy (106) in Antwort auf ein Empfangen eines Tokens (110) von dem Proxy (106) durch die Quelle umfaßt, wobei der Token den Client und die Warteschlangenposition des Clients für das Downloaden der angeforderten Datei identifiziert.

2. Verwahren nach Anspruch 1, wobei der Schritt des Einnehmens der Warteschlangenposition des Clients (102) durch den Proxy (106) die Schritte umfaßt:
Bereitstellen des Tokens für die Quelle (104) durch den Proxy (106), und
danach Bereitstellen von Information über die Warteschlangenposition für den Proxy durch die Quelle (104).

3. Verfahren nach Anspruch 1, wobei der Schritt des Einnehmens der Warteschlangenposition des Clients (102) durch den Proxy (106) den Schritt des Bereitstellens des Tokens (110) für den Client (102) durch die Quelle (104) in Antwort auf ein Anfordern eines Downloadens von der Quelle durch den Client umfaßt, wobei der Token den Client und die Warteschlangenposition des Clients für das Downloaden identifiziert.

4. Verfahren nach Anspruch 1, wobei der Schritt des Einnehmens der Warteschlangenposition des Clients durch den Proxy den Schritt des Bereitstellens des Tokens (110) für den Proxy (106) durch den Client in Antwort auf ein Annehmen einer Verbindungsanforderung von dem Client durch den Proxy umfaßt.

5. Verfahren nach Anspruch 1, ferner umfassend den Schritt des Kommunizieren des Clients (102) mit dem Proxy (106), um einen Download-Status der Datei zu ermitteln, nachdem der Client (102) von dem P2P-Netzwerk (100) getrennt und mit diesem erneut, verbunden worden ist.

6. Verfahren nach Anspruch 1, ferner umfassend die Schritte:
erneutes Verbinden des Clients (102) mit dem P2P-Netzwerk (100),
Bereitstellen des Tokens (110) für den Proxy (106) und die Quelle (104) durch den Client,
Bereitstellen von Download-Statusinformation für den Client durch den Proxy in Antwort auf ein Empfangen des Tokens (110) und
Veranlassen eines Wechselns der Download-Kontrolle für das Downloaden von dem Proxy zu dem Client durch die Quelle (104), in Antwort auf das Empfangen des Tokens.

7. Verfahren nach Anspruch 6, ferner umfassend den Schritt des Uploadens der Datei von der Quelle (104) zu dem Client (102) zu einem Zeitpunkt, welcher der Warteschlangenposition des Clients entspricht.

8. Verfahren nach Anspruch 1, ferner umfassend den Schritt des Uploadens der angeforderten Datei zu dem Proxy (106) durch die Quelle (104) in Antwort auf den Proxy, der die Warteschlangenposition des Clients (102) zu einem Zeitpunkt innehat, welcher der Warteschlangenposition (105) des Clients entspricht.

9. Verfahren nach Anspruch 8, ferner umfassend den Schritt des Uploadens der Datei von dem Proxy (106) zu dem Client (102) in Antwort auf ein erneutes Verbinden des Clients (102) mit dem P2P-Netzwerk (100), nachdem die Datei zu dem Proxy (106) heruntergeladen worden ist.

10. Verfahren nach Anspruch 8, ferner umfassend die Schritte:
erneutes Verbinden des Clients (102) mit dem P2P-Netzwerk (100),
Bereitstellen des Tokens (110) für die Quelle (104) durch den Client, während die Quelle die Datei zu dem Proxy (106) uploadet,
Beenden des Uploadens der Datei zu dem Proxy (106) durch die Quelle (104), und
Uploaden der Datei zu dem Client (102) durch die Quelle (104).

11. Verfahren nach Anspruch 10, wobei der Schritt des Uploadens der Datei zu dem Client (102) durch die Quelle (104) den Schritt des Uploadens eines nicht upgeloadeten Abschnitts der Datei zu dem Client durch die Quelle umfaßt, wobei das Verfahren ferner den Schritt des Beziehens eines upgeloadeten Abschnitts der Datei von dem Proxy durch den Client umfaßt, wobei der upgeloadete Abschnitt der Datei zu dem Proxy vor einem Beenden des Uploadens der Datei zu dem Proxy durch die Quelle upgeloadet worden ist.

12. Peer-to-Peer-Netzwerk, P2P-Netzwerk (100), umfassend ein Quellengerät (104), welches Zugriff auf eine Datei hat und welches eine Warteschlangenposition (105) für ein Downloaden der Datei in Antwort auf eine Anforderung eines Downloadens der Datei zuweist, und ein Client-Gerät (102), welches mit dem Quellengerät (104) gekoppelt werden kann, wobei das Client-Gerät (102) ein Downloaden der Datei von dem Quellengerät (104) anfordert, wobei das P2P-Netzwerk **dadurch gekennzeichnet ist, daß** ein Proxy-Gerät (106) mit dem Quellengerät (104) gekoppelt ist und mit dem Client-Gerät (102) gekoppelt werden kann und daß Proxy-Gerät angepaßt ist zum Bereitstellen eines Tokens (110) für das Quellengerät (104), um die Warteschlangenposition (105) des Client-Geräts (102) einzunehmen, wobei der Token das Client-Gerät und die Warteschlangenposition des Client-Geräts für das Downloaden der Datei identifiziert.

13. P2P-Netzwerk (100) nach Anspruch 12, wobei das Quellengerät (104) angepaßt ist zum Bereitstellen von Information über die Warteschlangenposition (105) für das Proxy-Gerät (106) in Antwort auf ein Empfangen des Tokens (110) von dem Proxy-Gerät.

14. P2P-Netzwerk nach Anspruch 12, wobei das Quellengerät (104) angepaßt ist zum Bereitstellen des Tokens (110) für das Client-Gerät (102) in Antwort auf ein Empfangen einer Anforderung eines Downloadens der Datei von dem Client-Gerät (102).

15. P2P-Netzwerk (100) nach Anspruch 12, wobei das Client-Gerät (102) angepaßt ist zum Bereitstellen des Tokens (110) für das Proxy-Gerät (106) in Antwort auf ein Empfangen einer Annahme einer Verbindungsanforderung von dem Proxy-Gerät (106).

16. P2P-Netzwerk (100) nach Anspruch 12, wobei das Client-Gerät (102) angepaßt ist zum Kommunizieren mit dem Proxy-Gerät (106), um den Download-Status der Datei von demselben zu ermitteln.

17. P2P-Netzwerk (100) nach Anspruch 12, wobei das Client-Gerät (102) dazu angepaßt ist, nach einem Trennen von dem P2P-Netzwerk mit demselben erneut zu verbinden und den Token (110) für das Proxy-Gerät (106) bereitzustellen, und wobei das Proxy-Gerät (106) dazu angepaßt ist, in Antwort auf ein Empfangen des Tokens (110) von dem Client-Gerät (102) Download-Statusinformation für das Client-Gerät bereitzustellen.

18. P2P-Netzwerk (100) nach Anspruch 17, wobei das Quellengerät dazu angepaßt ist, zu einem Zeitpunkt, welcher der Warteschlangenposition (105) des Client-Geräts entspricht, die Datei von dem Quellengerät zu dem Client-Gerät herunterzuladen.

19. P2P-Netzwerk (100) nach Anspruch 17, wobei das Client-Gerät (102) dazu angepaßt ist, nach einem Empfangen der Download-Statusinformation von dem Proxy (106) den Token (110) für das Quellengerät (104) bereitzustellen, und wobei das Quellengerät (104) dazu angepaßt ist, in Antwort auf das Empfangen des Tokens (110) von dem Client-Gerät (102) ein Wechseln der Download-Kontrolle für das Downloaden von dem Proxy-Gerät (106) zu dem Client-Gerät zu veranlassen.

20. P2P-Netzwerk nach Anspruch 12, wobei das Quellengerät (104) dazu angepaßt ist, die angeforderte Datei zu dem Proxy-Gerät (106) in Antwort auf das Proxy-Gerät, das die Warteschlangenposition des Client-Geräts noch hat, zu einem Zeitpunkt, welcher der Warteschlangenposition des Client-Geräts entspricht, upzuloaden.

21. P2P-Netzwerk (100) nach Anspruch 20, wobei das Proxy-Gerät (106) dazu angepaßt ist, die Datei zu dem Client-Gerät (102) in Antwort auf ein erneutes Verbinden mit dem P2P-Netzwerk durch das Client-Gerät upzuloaden, nachdem die Datei zu dem Proxy-Gerät (106) upgeloadet worden ist.

22. P2P-Netzwerk (100) nach Anspruch 20, wobei das Client-Gerät (102) dazu angepaßt ist, erneut mit dem P2P-Netzwerk (100) zu verbinden und den Token (110) für das Quellengerät (102) bereitzustellen, während das Quellengerät die Datei zu dem Proxy-Gerät (106) uploadet, und wobei das Quellengerät (102) dazu angepaßt ist, in Antwort auf ein Empfangen des Tokens (110), während das Quellengerät die Datei zu dem Proxy-Gerät (106) uploadet, das Uploaden der Datei zu dem Proxy-Gerät zu beenden und danach die Datei zu dem Client-Gerät upzuloaden.

23. P2P-Netzwerk (100) nach Anspruch 21, wobei das Quellengerät (104) dazu angepaßt ist, einen nicht upgeloadeten Abschnitt der Datei zu dem Client-Gerät (102) upzuloaden, und wobei das Client-Gerät (102) dazu angepaßt ist, einen upgeloadeten Abschnitt der Datei von dem Proxy-Gerät zu beziehen.

24. Mobilkommunikationsgerät (102), umfassend eine Transceiver-Schaltungseinheit (604) zum Senden von Signalen an ein Peer-to-Peer-Netzwerk, P2P-Netzwerk (100) und zum Empfangen von Signalen von demselben und einen Controller (606), welcher mit der Transceiver-Schaltungseinheit (604) gekoppelt ist, Information für dieselbe bereitzustellen, um ein Downloaden einer Datei von einem Quellengerät (104) in dem P2P-Netzwerk (100) anzufordern, wobei das Mobilkommunikationsgerät **dadurch gekennzeichnet ist, daß** die Transceiver-Schaltungseinheit (604) dazu angepaßt ist, Signale von dem Quellengerät (104) zu empfangen und Information, welche aus denselben erzeugt wird, für den Controller (606) bereitzustellen, wobei die Information einen Token (110) enthält, wobei der Token das Mobilkommunikationsgerät (102) und die Warteschlangenposition (105), die dem Mobilkommunikationsgerät für das Downloaden der Datei zugewiesen ist, identifiziert, wobei der Controller (606) dazu angepaßt ist, in Antwort auf das Empfangen der Information, Information, welche den Token (110) enthält, für die Transceiver-Schaltungseinheit (604), zum Senden von Signalen an ein Proxy-Gerät (106) in dem P2P-Netzwerk (100) derart bereitzustellen, daß das Proxy-Gerät (106) die Warteschlangenposition, die dem Mobilkommunikationsgerät (102) zugewiesen ist, einnehmen kann.

25. Mobilkommunikationsgerät (102) nach Anspruch 24, wobei der Controller (606) dazu angepaßt ist, information für die Trafisceiver-Schaltungseinhelt (604) zum Senden einer Verbindungsanforderung an das Proxy-Gerät (106) bereitzustellen, und wobei der Controller (606) dazu angepaßt ist, Information, welche den Token (110) enthält, für die Transceiver-Schaltungseinheit (604) zum Senden von Signalen an das Proxy-Gerät (106) in Antwort auf ein Empfangen von Information von der Transceiver-Schaltungseinheit über eine Annahme einer Verbindungsanforderung, die von dem Proxy-Gerät empfangen worden ist, bereitzustellen.

26. Mobilkommunikationsgerät (102) nach Anspruch 24, wobei der Controller (606) dazu angepaßt ist, Information für die Transceiver-Schaltungseinheit (604) zum Senden einer Anforderung an das Proxy-Gerät (106) bereitzustellen, um einen Download-Status der Datei von demselben zu ermitteln.

27. Mobilkommunikationsgerät (102) nach Anspruch 24, wobei der Controller (606) dazu angepaßt ist, nach einem Feststellen, daß das Mobilkommunikationsgerät von dem P2P-Netzwerk (100) getrennt worden ist, Information für die Transceiver-Schaltungseinheit (604) zum erneuten Verbinden mit dem P2P-Netzwerk (100) und den Token (110) für das Quellengerät (104) bereitzustellen, und wobei der Controller (606) dazu angepaßt ist, danach von Information von der Transceiver-Schaltungseinheit zu empfangen, welche Download-Statusinformation von dem Quellengerät (102) enthält.

28. Mobilkommunikationsgerät (102) nach Anspruch 27, wobei der Controller (606) dazu angepaßt ist, in Antwort auf ein Bestimmen, daß die Download-Statusinformation angibt, daß das Mobilkommunikationsgerät (102) mit dem P2P-Netzwerk erneut verbunden worden ist, nachdem die Datei zu dem Proxy-Gerät (106) upgeloadet worden ist, Information für die Transceiver-Schaltungseinheit (604) bereitzustellen, um mit dem Proxy-Gerät (106) zum Empfangen von Download-Signalen von dem Proxy-Gerät (106) zu verbinden, wobei die Download-Signale die angeforderte Datei enthalten.

29. Mobilkommunikationsgerät (102) nach Anspruch 27, wobei der Controller (606) dazu angepaßt ist, in Antwort auf ein Bestimmen, daß die Download-Statusinformation angibt, daß das Mobilkommunikationsgerät (102) mit dem P2P-Neztwerk erneut verbunden worden ist, während die Datei zu dem Proxy-Gerät (106) upgeloadet wird, Information für die Transceiver-Schaltungseinheit (604) bereitzustellen, um mit dem Quellengerät (104) zum Empfangen von Download-Signalen von dem Quellengerät (104) zu verbinden, wobei die Download-Signale wenigstens einen Abschnitt der angeforderten Datei enthalten.

30. Mobilkommunikationsgerät (102) nach Anspruch 29, wobei die Download-Signale einen nicht upgeloadeten Abschnitt der Datei enthalten und wobei der Controller (606) dazu angepaßt ist, Information für die Transceiver-Schaltungseinheit (604) bereitzustellen, um Signale zu dem Proxy-Gerät (106) zum Anfordern eines Beziehens eines upgeloadeten Abschnitts der Datei von demselben zu senden.

31. Quellengerät (104) zur Verwendung in einem Peer-to-Peer-Netzwerk, P2P-Netzwerk (100), umfassend Eingangs-/Ausgangs-Schaltungen (802) zum Bereitstellen von Signalen für und zum Empfangen von Signalen von weitere(n) Geräte(n) in dem P2P-Netzwerk (100), einen Speicher (806) zum Speichern einer Datei, **dadurch gekennzeichnet, daß** es ferner einen Quellen-Controller (804) umfaßt, welcher angepaßt ist zum Zuweisen einer Warteschlangenposition (105) zum Uploaden der Datei und zum Erzeugen eines Tokens (110) dafür in Antwort auf ein Empfangen einer Anforderung eines Downloadens der Datei, wobei der Token (110) ein Client-Gerät (102) in dem P2P-Netzwerk (100) identifiziert, welches ein Downloaden der Datei anfordert, und die Warteschlangenposition (105) des Client-Geräts für das Downloaden der Datei, wobei der Quellen-Controller (104) angepaßt ist zum Bereitstellen des Tokens für die Eingangs-/Ausgangs-Schaltungen (802) zum Bereitstellen für das Client-Gerät, und wobei der Quellen-Controller angepaßt ist zum Bereitstellen von Information über die Warteschlangenposition, betreffend die Warteschlangenposition des Client-Geräts für ein Proxy-Gerät (106) in Antwort auf ein Empfangen des Tokens von dem Proxy-Gerät.

32. Quellengerät (104) nach Anspruch 31, wobei der Controller (804) dazu angepaßt ist, in Antwort auf ein Empfangen von Information über erneutes Verbinden, welche den Token (110) enthält, von dem Client-Gerät (102) Download-Statusinformation für das Client-Gerät bereitzustellen und ein Wechseln der Download-Kontrolle für das Downloaden von dem Proxy-Gerät (106) zu dem Client-Gerät (102) zu veranlassen.

33. Quellengerät (104) nach Anspruch 32, wobei der Controller (804) dazu angepaßt ist, in Antwort auf ein Feststellen eines Trennens des Client-Geräts (102) automatisch ein Wechseln der Download-Kontrolle für das Downloaden von dem Client-Gerät (102) zu dem Proxy-Gerät zu veranlassen.

34. Quellengerät (104) nach Anspruch 32, wobei der Controller (804) dazu angepaßt ist, zu einem Zeitpunkt, welcher der Warteschlangenposition des Client-Geräts entspricht, die Datei aus dem Speicher zu beziehen und die Datei für die Eingangs-/Ausgangs-Schaltungen zum Uploaden der Datei zu dem Client-Gerät bereitzustellen.

35. Quellengerät (104) nach Anspruch 31, wobei der Quellen-Controller (804) dazu angepaßt ist, zu einem Zeitpunkt, welcher der Warteschlangenposition des Client-Geräts entspricht, die Datei aus dem Speicher (806) und die Datei für die Eingangs/ Ausgangs-Schaltungen zum Uploaden der Datei zu dem Proxy-Gerät (106) in Antwort auf das Proxy-Gerät, das die Warteschlangenposition des Client-Geräts (102) noch hat, an der Warteschlangenposition des Client-Geräts bereitzustellen.

36. Quellengerät (104) nach Anspruch 35, wobei der Quellen-Controller (804) dazu angepaßt ist, in Antwort auf ein Empfangen des Tokens (110) von dem Client-Gerät (102) während eines Uploadens der Datei zu dem Proxy-Gerät (106), das Uploaden der Datei zu dem Proxy-Gerät zu beenden und danach die Datei zu dem Client-Gerät (102) upzuloaden.

37. Quellengerät (104) nach Anspruch 36, wobei der Controller (804) dazu angepaßt ist, einen nicht upgeloadeten Abschnitt der Datei zu dem Client-Gerät (102) upzuloaden.

38. Quellengerät (104) nach Anspruch 31, wobei das Quellengerät ein feststehendes Server-Gerät ist.

39. Proxy-Gerät (106) zur Verwendung in einem Peer-to-Peer-Netzwerk, P2P-Netzwerk, umfassend Eingangs-/Ausgangs-Schaltungen (1002) zum Bereitstellen von Signalen für und zum Empfangen von Signalen von weitere(n) Gerät (en) in dem P2P-Netzwerk und einen Proxy-Controller (1004), welcher mit den Eingangs-/Ausgangs-Schaltungen gekoppelt ist, wobei das Proxy-Gerät **dadurch gekennzeichnet ist, daß** der Proxy-Controller angepaßt ist zum Empfangen eines Tokens (110) von einem Client-Gerät (102) in dem P2P-Netzwerk, wobei der Token (110) das Client-Gerät identifiziert, welches ein Downloaden einer Datei von einem Quellengerät in dem P2P-Netzwerk anfordert, das Zugriff hat auf die Datei und auf die Position des Client-Geräts in der Warteschlange für das Downloaden der Datei, wobei der Proxy-Controller (1004) dazu angepaßt ist, den Token (110) den Eingangs-/Ausgangs-Schaltungen (1002) zur Weiterleitung an das Quellengerät bereitzustellen, um die Warteschlangenposition des Client-Geräts (102) in Antwort auf ein Feststellen eines Trennens des Client-Geräts von dem P2P-Netzwerk einzunehmen.

40. Proxy-Gerät (106) nach Anspruch 39, wobei der Proxy-Controller (1004) dazu angepaßt ist, Information über die Warteschlangenposition (105) betreffend die Warteschlangenposition des Client-Geräts von dem Quellengerät nach Bereitstellen des Tokens (110) für dasselbe zu empfangen.

41. Proxy-Gerät nach Anspruch 39, wobei der Proxy-Controller (1004) dazu angepaßt ist, eine Information über eine Annahme einer Verbindungsanforderung für die Eingangs-/Ausgangs-Schaltungen (1002) zum Bereitstellen für das Client-Gerät (102) in Antwort auf ein Empfangen einer Verbindungsanforderung von dem Client-Gerät bereitzustellen.

42. Proxy-Gerät (106) nach Anspruch 39, wobei der Proxy-Controller (1004) dazu angepaßt ist, Download-Statusinformation der Datei für die Eingangs-/Ausgangs-Schaltungen (1002) zum Bereitstellen für das Client-Gerät (102) in Antwort auf ein Empfangen einer Statusanforderung von dem Client-Gerät bereitzustellen.

43. Proxy-Gerät (106) nach Anspruch 39, ferner umfassend einen Proxy-Speicher (1006), wobei der Proxy-Controller (1004) angepaßt ist, wenigstens einen Abschnitt der Datei von dem Quellengerät zu empfangen und den wenigstens einen Abschnitt der Datei in dem Proxy-Speicher in Antwort darauf zu speichern, daß die Warteschlangenposition (105) des Client-Geräts (102) noch an der Warteschlangenposition des Client-Geräts ist.

44. Proxy-Gerät (106) nach Anspruch 43, wobei der Proxy-Controller (1004) dazu angepaßt ist, wenigstens einen Abschnitt der Datei von dem Proxy-Speicher (1006) zu beziehen und die Datei für die Eingangs-/Ausgangs-Schaltungen (1002) zum Downloaden zu dem Client-Gerät in Antwort auf ein Feststellen eines erneuten Verbindens mit dem P2P-Netzwerk (100) durch das Client-Gerät bereitzustellen.

45. Proxy Gerät nach Anspruch 43, wobei der Proxy-Controller (1004) dazu angepaßt ist, den wenigstens einen Abschnitt der Datei von dem Proxy-Speicher (1006) und die Datei für die Eingangs-/Ausgangs-Schaltungen (1002) zum Downloaden zu dem Client-Gerät in Antwort auf ein Empfangen einer Anforderung des wenigstens einen Abschnitts der Datei von dem Client-Gerät bereitzustellen.

46. Proxy-Gerät nach Anspruch 39, wobei das Proxy-Gerät (106) ein feststehendes Gerät ist.

## Revendications

1. Procédé pour conserver une position dans une queue (105) pour un client (102) dans un réseau pair à pair, P2P, pour un téléchargement depuis une source (104), le procédé comprenant l'étape selon laquelle le client (102) demande le téléchargement d'un fichier demandé depuis la source (104), **caractérisé en ce que** le procédé comprend l'étape selon laquelle un proxy (106) prend la position dans la queue du client en réponse au fait que la source reçoit un jeton (110) en provenance du proxy (106), le jeton identifiant le client et la position du client dans la queue pour le téléchargement du fichier demandé.

2. Procédé selon la revendication 1, dans lequel l'étape selon laquelle le proxy (106) prend la position du client (102) dans la queue comprend les étapes selon lesquelles :
le proxy (106) envoie le jeton à la source (104) ; et
la source (104) envoie ensuite au proxy des informations de position en file d'attente.

3. Procédé selon la revendication 1, dans lequel l'étape selon laquelle le proxy (106) prend la position du client (102) dans la queue comprend l'étape selon laquelle la source (104) envoie le jeton (110) au client (102) en réponse au fait que le client demande un téléchargement depuis la source, le jeton identifiant le client et la position en file d'attente du client pour le téléchargement.

4. Procédé selon la revendication 1, dans lequel l'étape selon laquelle le proxy prend la position du client dans la queue comprend l'étape selon laquelle le client envoie le jeton (110) au proxy (106) en réponse au fait que le proxy accepte une demande de connexion en provenance du client.

5. Procédé selon la revendication 1, comprenant en outre l'étape selon laquelle le client (102) communique avec le proxy (106) pour obtenir un état de téléchargement du fichier après que le client (102) a été déconnecté et s'est reconnecté au réseau P2P (100).

6. Procédé selon la revendication 1, comprenant en outre les étapes selon lesquelles :
le client (102) se reconnecte au réseau P2P (100);
le client envoie le jeton (110) au proxy (106) et à la source (104);
le proxy envoie des informations d'état de téléchargement au client en réponse à la réception du jeton (110) ; et
la source (104) échange une commande de téléchargement pour le téléchargement du proxy vers le client en réponse à la réception du jeton.

7. Procédé selon la revendication 6, comprenant en outre l'étape de téléchargement du fichier de la source (104) vers le client (102) à un instant correspondant à la position du client dans la queue.

8. Procédé selon la revendication 1, comprenant en outre l'étape selon laquelle la source (104) télécharge le fichier demandé vers le proxy (106) en réponse au fait que le proxy occupe la position du client (102) dans la queue à un instant correspondant à la position du client dans la queue (105).

9. Procédé selon la revendication 8, comprenant en outre l'étape de téléchargement du fichier du proxy (106) vers le client (102) en réponse au fait que le client (102) se reconnecte au réseau P2P (100) après que le fichier a été téléchargé vers le proxy (106).

10. Procédé selon la revendication 8, comprenant en outre les étapes selon lesquelles :
le client (102) se reconnecte au réseau P2P (100) ;
le client envoie le jeton (110) à la source (104) pendant que la source est en train de télécharger le fichier vers le proxy (106) ;
la source (104) met fin au téléchargement du fichier vers le proxy (106) ; et
la source (104) télécharge le fichier vers le client (102).

11. Procédé selon la revendication 10, dans lequel l'étape selon lequel la source (104) télécharge le fichier vers le client (102) comprend l'étape selon laquelle la source télécharge une partie non téléchargée du fichier vers le client, le procédé comprenant en outre l'étape selon laquelle le client récupère une partie téléchargée du fichier auprès du proxy, la partie téléchargée du fichier ayant été téléchargée vers le proxy avant que la source mette fin au téléchargement du fichier vers le proxy.

12. Réseau pair à pair, P2P, (100) comprenant un dispositif source (104) ayant accès à un fichier et attribuant une position dans une queue (105) pour le téléchargement du fichier en réponse à une demande de téléchargement du fichier, et un dispositif client (102) pouvant être couplé au dispositif source (104), le dispositif client (102) demandant un téléchargement du fichier depuis le dispositif source (104), le réseau P2P étant **caractérisé en ce qu'**un dispositif proxy (106) est couplé au dispositif source (104) et peut être couplé au dispositif client (102), et le dispositif proxy est conçu pour envoyer un jeton (110) au dispositif source (104) de façon à prendre la position (105) du dispositif client (102) dans la queue, le jeton identifiant le dispositif client et la position du dispositif client dans la queue pour le téléchargement du fichier.

13. Réseau P2P (100) selon la revendication 12, dans lequel le dispositif source (104) est conçu pour envoyer des informations de position dans la queue (105) au dispositif proxy (106) en réponse à la réception du jeton (110) en provenance du dispositif proxy.

14. Réseau P2P selon la revendication 12, dans lequel le dispositif source (104) est conçu pour envoyer le jeton (110) au dispositif client (102) en réponse à la réception d'une demande de téléchargement du fichier en provenance du dispositif client (102).

15. Réseau P2P (100) selon la revendication 12, dans lequel le dispositif client (102) est conçu pour envoyer le jeton (110) au dispositif proxy (106) en réponse à la réception d'une acceptation de demande de connexion en provenance du dispositif proxy (106).

16. Réseau P2P (100) selon la revendication 12, dans lequel le dispositif client (102) est conçu pour communiquer avec le dispositif proxy (106) pour obtenir de celui-ci un état de téléchargement du fichier.

17. Réseau P2P (100) selon la revendication 12, dans lequel le dispositif client (102) est conçu pour, après une déconnexion d'avec le réseau P2P, se reconnecter à celui-ci et envoyer le jeton (110) au dispositif proxy (106), et dans lequel le dispositif proxy (106) est conçu pour, en réponse à la réception du jeton (110) en provenance du dispositif client (102), envoyer des informations d'état de téléchargement au dispositif client.

18. Réseau P2P (100) selon la revendication 17, dans lequel le dispositif source est conçu pour, à un instant correspondant à la position (105) du dispositif client dans la queue, télécharger le fichier du dispositif source vers le dispositif client.

19. Réseau P2P (100) selon la revendication 17, dans lequel le dispositif client (102) est conçu pour, après la réception des informations d'état de téléchargement en provenance du proxy (106), envoyer le jeton (110) au dispositif source (104), et dans lequel le dispositif source (104) est conçu pour, en réponse à la réception du jeton (110) en provenance du dispositif client (102), échanger une commande de téléchargement pour le téléchargement du dispositif proxy (106) vers le dispositif client.

20. Réseau P2P selon la revendication 12, dans lequel le dispositif source (104) est conçu pour télécharger le fichier demandé vers le dispositif proxy (106) en réponse au fait que le dispositif proxy occupe encore la position du dispositif client dans la queue à un instant correspondant à la position du dispositif client dans la queue.

21. Réseau P2P (100) selon la revendication 20, dans lequel le dispositif proxy (106) est conçu pour télécharger le fichier au dispositif client (102) en réponse au fait que le dispositif client se reconnecte au réseau P2P après que le fichier a été téléchargé vers le dispositif proxy (106).

22. Réseau P2P (100) selon la revendication 20, dans lequel le dispositif client (102) est conçu pour se reconnecter au réseau P2P (100) et envoyer le jeton (110) au dispositif source (102) pendant que le dispositif source est en train de télécharger le fichier vers le dispositif proxy (106), et dans lequel le dispositif source (102) est conçu pour, en réponse à la réception du jeton (110) pendant que le dispositif source est en train de télécharger le fichier vers le dispositif proxy (106), mettre fin au téléchargement du fichier vers le dispositif proxy, puis télécharger le fichier vers le dispositif client.

23. Réseau P2P (100) selon la revendication 21, dans lequel le dispositif source (104) est conçu pour télécharger une partie non téléchargée du fichier vers le dispositif client (102), et dans lequel le dispositif client (102) est conçu pour recevoir une partie téléchargée du fichier en provenance du Dispositif proxy.

24. Dispositif de communication mobile (102) comprenant des circuits émetteurs-récepteurs (604) pour la transmission de signaux à un réseau pair à pair, P2P, (100), et la réception de signaux en provenance de celui-ci, et un contrôleur (606), couplé aux circuits émetteurs-récepteurs (604) pour leur envoyer des informations pour demander le téléchargement d'un fichier depuis un dispositif source (104) sur le réseau P2P (100), le dispositif de communication mobile étant **caractérisé en ce que** les circuits émetteurs-récepteurs (604) sont conçus pour recevoir des signaux en provenance du dispositif source (104) et pour envoyer des informations générées par celui-ci au contrôleur (606), les informations incluant un jeton (110), le jeton identifiant le dispositif de communication mobile (102) et la position dans une queue (105) attribuée au dispositif de communication mobile pour le téléchargement du fichier, le contrôleur (606) étant conçu pour, en réponse à la réception des informations, envoyer des informations incluant le jeton (110) aux circuits émetteurs-récepteurs (604) pour la transmission de signaux à un dispositif proxy (106) sur le réseau P2P (100), de telle sorte que le dispositif proxy (106) puisse prendre la position en file d'attente attribuée au dispositif de communication mobile (102).

25. Dispositif de communication mobile (102) selon la revendication 24, dans lequel le contrôleur (606) est conçu pour envoyer des informations aux circuits émetteurs-récepteurs (604) pour la transmission d'une demande de connexion au dispositif proxy (106), et dans lequel le contrôleur (606) est conçu pour envoyer les informations incluant le jeton (110) aux circuits émetteurs-récepteurs (604) pour la transmission de signaux au dispositif proxy (106) en réponse à la réception d'informations en provenance des circuits émetteurs-récepteurs concernant une acceptation de demande de connexion reçue en provenance du dispositif proxy.

26. Dispositif de communication mobile (102) selon la revendication 24, dans lequel le contrôleur (606) est conçu pour envoyer des informations aux circuits émetteurs-récepteurs (604) pour la transmission d'une demande au dispositif proxy (106) de façon à obtenir de celui-ci un état de téléchargement de fichier.

27. Dispositif de communication mobile (102) selon la revendication 24, dans lequel le contrôleur (606) est conçu pour, après la détection du fait que le dispositif de communication mobile a été déconnecté du réseau P2P (100), envoyer des informations aux circuits émetteurs-récepteurs (604) pour la reconnexion au réseau P2P (100) et pour l'envoi du jeton (110) au dispositif source (104), et le contrôleur (606) est conçu pour recevoir ensuite en provenance des circuits émetteurs-récepteurs des informations incluant des informations d'état de téléchargement en provenance du dispositif source (102).

28. Dispositif de communication mobile (102) selon la revendication 27, dans lequel le contrôleur (606) est conçu pour, en réponse à la détermination du fait que les informations d'état de téléchargement indiquent que le dispositif de communication mobile (102) s'est reconnecté au réseau P2P après que le fichier a été téléchargé vers le dispositif proxy (106), envoyer des informations aux circuits émetteurs-récepteurs (604) pour la connexion au dispositif proxy (106) de façon à recevoir des signaux de téléchargement en provenance du dispositif proxy (106), les signaux de téléchargement comprenant le fichier demandé.

29. Dispositif de communication mobile (102) selon la revendication 27, dans lequel le contrôleur (606) est conçu pour, en réponse à la détermination du fait que les informations d'état de téléchargement indiquent que le dispositif de communication mobile (102) s'est reconnecté au réseau P2P après que le fichier a été téléchargé vers le dispositif proxy (106), envoyer des informations aux circuits émetteurs-récepteurs (604) pour la connexion au dispositif source (104) de façon à recevoir des signaux de téléchargement en provenance du dispositif source (104), les signaux de téléchargement comprenant au moins une partie du fichier demandé.

30. Dispositif de communication mobile (102) selon la revendication 29, dans lequel les signaux de téléchargement incluent une partie non téléchargée du fichier, et dans lequel le contrôleur (606) est conçu pour envoyer des informations aux circuits émetteurs-récepteurs (604) pour la transmission de signaux au dispositif proxy (106) de façon à demander la récupération auprès de celui-ci d'une partie téléchargée du fichier.

31. Dispositif source (104) à utiliser dans un réseau pair à pair, P2P, (100), comprenant des circuits d'entrée/sortie (802) pour l'envoi de signaux à destination et la réception de signaux en provenance d'autres dispositifs sur le réseau P2P (100), une mémoire (806) pour le stockage d'un fichier, **caractérisé en ce qu'**il comprend en outre un contrôleur source (804) conçu pour attribuer une position dans une queue (105) pour le téléchargement du fichier et pour générer un jeton (110) à cet effet en réponse à la réception d'une demande de téléchargement du fichier, le jeton (110) identifiant un dispositif client (102) sur le réseau P2P (100) demandant le téléchargement du fichier et la position dans une queue (105) du dispositif client pour le téléchargement du fichier, le contrôleur source (104) étant conçu pour envoyer le jeton aux circuits d'entrée/sortie (802) pour l'envoi au dispositif client, et le contrôleur source (104) étant conçu pour envoyer des informations de position dans une queue concernant la position dans une queue du dispositif client à un dispositif proxy (106), en réponse à la réception du jeton en provenance du dispositif proxy.

32. Dispositif source (104) selon la revendication 31, dans lequel le contrôleur (804) est conçu pour, en réponse à la réception d'informations de reconnexion incluant le jeton (110) en provenance du dispositif client (102), envoyer des informations d'état de téléchargement au dispositif client et échanger une commande de téléchargement pour le téléchargement du dispositif proxy (106) vers le dispositif client (102).

33. Dispositif source (104) selon la revendication 32, dans lequel le contrôleur (804) est conçu pour, en réponse à la détection d'une déconnexion du dispositif client (102), échanger automatiquement la commande de téléchargement pour le téléchargement du dispositif client (102) vers le dispositif proxy.

34. Dispositif source (104) selon la revendication 32, dans lequel le contrôleur (804) est conçu pour, à un instant correspondant à la position en file d'attente du dispositif client, récupérer le fichier de la mémoire et envoyer le fichier aux circuits d'entrée/sortie pour le téléchargement du fichier vers le dispositif client.

35. Dispositif source (104) selon la revendication 31, dans lequel le contrôleur source (804) est conçu pour, à un instant correspondant à la position du dispositif client dans la queue, récupérer le fichier de la mémoire (806) et envoyer le fichier aux circuits d'entrée/sortie pour le téléchargement du fichier vers le dispositif proxy (106), en réponse au fait que le dispositif proxy occupe encore la position dans la queue du dispositif client (102) à la position dans la queue du dispositif client.

36. Dispositif source (104) selon la revendication 35, dans lequel le contrôleur source (804) est conçu pour, en réponse à la réception du jeton (110) en provenance du dispositif client (102) pendant le téléchargement du fichier vers le dispositif proxy (106), mettre fin au téléchargement du fichier vers le dispositif proxy, puis télécharger le fichier vers le dispositif client (102).

37. Dispositif source (104) selon la revendication 36, dans lequel le contrôleur (804) est conçu pour télécharger une partie non téléchargée du fichier vers le dispositif client (102).

38. Dispositif source (104) selon la revendication 31, dans lequel le dispositif source est un dispositif serveur fixe.

39. Dispositif proxy (106) à utiliser dans un réseau pair à pair, P2P, (100), comprenant des circuits d'entrée/sortie (1002) pour l'envoi de signaux à destination et la réception de signaux en provenance d'autres dispositifs sur le réseau P2P, et un contrôleur proxy (1004) couplé aux circuits d'entrée/sortie, le dispositif proxy étant **caractérisé en ce que** le contrôleur proxy est conçu pour recevoir un jeton (110) en provenance d'un dispositif client (102) sur le réseau P2P, le jeton (110) identifiant le dispositif client demandant le téléchargement d'un fichier depuis un dispositif source du réseau P2P ayant accès au fichier et la position dans une queue du dispositif client pour le téléchargement du fichier, le contrôleur proxy (1004) étant conçu pour envoyer le jeton (110) aux circuits d'entrée/sortie (1002) pour l'envoi au dispositif source de façon à prendre la position dans la queue du dispositif client (102) en réponse à la détection d'une déconnexion du dispositif client d'avec le réseau P2P.

40. Dispositif proxy (106) selon la revendication 39, dans lequel le contrôleur proxy (1004) est conçu pour recevoir des informations de position en file d'attente (105) concernant la position dans la queue du dispositif client en provenance du dispositif source, après l'envoi du jeton (110) à celui-ci.

41. Dispositif proxy selon la revendication 39, dans lequel le contrôleur proxy (1004) est conçu pour envoyer des informations d'acceptation de demander de connexion aux circuits d'entrée/sortie (1002) pour l'envoi au dispositif client (102) en réponse à la réception d'une demande de connexion en provenance du dispositif client.

42. Dispositif proxy (106) selon la revendication 39, dans lequel le contrôleur proxy (1004) est conçu pour envoyer des informations d'état de téléchargement de fichier aux circuits d'entrée/sortie (1002) pour l'envoi au dispositif client (102) en réponse à la réception d'une demande d'état en provenance du dispositif client.

43. Dispositif proxy (106) selon la revendication 39, comprenant en outre une mémoire mandataire (1006), dans lequel le contrôleur proxy (1004) est conçu pour recevoir au moins une partie du fichier en provenance du dispositif source et pour stocker l'au moins une partie du fichier dans la mémoire proxy en réponse au fait qu'il occupe encore la position dans la queue (105) du dispositif client (102) à la position dans la queue du dispositif client.

44. Dispositif proxy (106) selon la revendication 43, dans lequel le contrôleur proxy (1004) est conçu pour récupérer au moins une partie du fichier de la mémoire proxy (1006) et envoyer le fichier aux circuits d'entrée/sortie (1002) pour le téléchargement vers le dispositif client en réponse à la détection de la reconnexion du dispositif client au réseau P2P (100).

45. Dispositif proxy selon la revendication 43, dans lequel le contrôleur proxy (1004) est conçu pour récupérer au moins une partie du fichier auprès de la mémoire proxy (1006) et envoyer le fichier aux circuits d'entrée/sortie (1002) pour le téléchargement vers le dispositif client en réponse à la réception d'une demande pour l'au moins une partie du fichier en provenance du dispositif client.

46. Dispositif proxy selon la revendication 39, dans lequel le dispositif proxy (106) est un dispositif fixe.
